# EUROPEAN PATENT APPLICATION

(11) **EP 4 410 105 A1**
(43) Date of publication of application: **07.08.2024**
(21) Application number: 22876218.3
(22) Date of filing: 27.09.2022
(51) Int. Cl.: A23C 20/02, A23D 7/00

(54) **IMITATION CHEESE, METHOD FOR PRODUCING IMITATION CHEESE, AND FOOD PRODUCT**

(30) Priority: 30.09.2021 JP 2021162018
(71) Applicant: ADEKA CORPORATION, Arakawa-ku Tokyo 116-8554 (JP)
(72) Inventor: ABE, Kazumasa, Tokyo 116-8554 (JP); OZAKI, Satoru, Tokyo 116-8554 (JP); SASAKI, Kazuhiro, Tokyo 116-8554 (JP)
(74) Representative: Hoffmann Eitle
(86) International application number: PCT/JP2022/035926
(87) International publication number: WO 2023/054352

(57) **Abstract**

The objects of the present invention are: (1) to provide an imitation cheese in which an odd taste derived from a vegetable material is less likely to be imparted; (2) to provide an imitation cheese having excellent processing suitability in which during shaping the imitation cheese by shredding, dicing, cleaving, cutting, or the like, the shaped imitation cheese is not attached to another shaped imitation cheese, and during shaping, the imitation cheese does not collapse into a powder or pieces; and (3) to provide an imitation cheese having cheese-like texture and physical properties when the imitation cheese is eaten as it is or after heating. The present invention provides an imitation cheese that includes an oil-in-water emulsion containing the following components A and B, and that satisfies the following condition 1:
(Component A) a whole grain ground product of high-carbohydrate beans, provided that the high-carbohydrate beans refer to beans containing 50 to 80% by mass of carbohydrate;
(Component B) an oxidized starch (excluding an oxidized starch that has been subjected to a cross-linking treatment); and
(Condition 1) a pH thereof is 3.0 to 5.5.

## Description

### TECHNICAL FIELD

The present invention relates to an imitation cheese, a method for producing the imitation cheese, and a food product.

### BACKGROUND ART

Cheese is one type of dairy product produced by a process such as coagulation and fermentation using a raw material derived from milk from cow, water buffalo, sheep, goat, yak, or the like.

Cheese produced using a milk material cannot be eaten by those who are commonly referred to as vegetarians and are easily affected by a sudden rise in the price of milk material. There is thus a demand for an imitation cheese that has an appearance, a taste and a texture similar to cheese without using a milk-derived raw material.

Further, as cheese for use in pizza, gratin, or the like, a shaped cheese prepared by shaving or slicing a block cheese is often used since it is easily used during cooking and easily melted during heat-cooking. Consequently, there is also a demand for an imitation cheese with processing suitability which can be shaped by shredding, dicing, or the like.

However, the appearance, processing suitability, taste and texture of cheese largely depend on a milk-derived protein contained in the cheese. Therefore, when the milk-derived protein is simply reduced, shape retention properties deteriorate, and cheese is likely to become spread-like or paste-like state.

The development of imitation cheeses that satisfy the required characteristics of cheese using vegetable proteins instead of milk-derived raw materials has proceeded.

Patent Literature 1 discloses a non-dairy cheese replica containing a coacervate containing one or more proteins isolated and purified from a non-animal source.

Patent Literature 2 discloses a food composition that has a cheese-like structure and that contains 0.5 to 10% by mass of soybean protein as a solid component and 15 to 35% by mass of wheat protein as a solid component, relative to the whole amount of the food composition, and in which the soybean protein is coagulated.

In terms of concern with food allergy and difficulty in maintaining a soft texture of cheese or imitation cheese having a protein gel as a skeleton after heating, the development of an imitation cheese in which the amount of contained protein is reduced has proceeded in recent years regardless of being an animal or vegetable imitation cheese.

Patent Literature 3 discloses a cheese-like food having a protein content of 10% by mass or less. Here, the cheese-like food is a low-protein cheese-like food containing (a) dextrin that is derived from potato and has a DE of 2 to 5, (b) one or more selected from the group consisting of carrageenan, agar, deacylated gellan gum and LM pectin, and (c) an emulsifier.

Patent Literature 4 discloses a heat-resistant cheese-like processed food that contains an oxidized starch, a fat and oil having a slip melting point of 30°C or higher, and water. Furthermore, this food has a milk protein content of 0.1% by mass or less, an amylose content of 25% by mass or more relative to the whole amount of the oxidized starch, and has shape retention properties even though there is practically no milk protein.

Patent Literature 5 discloses a cheese-like processed food that contains an oxidized starch, a hydroxypropyl starch, a fat and oil having a slip melting point of 30°C or higher, and water. Furthermore, this food has a milk protein content of 0.1% by mass or less, an amylose content of 0.1 to 23% by mass relative to the whole amount of the oxidized starch, and a certain degree of stringiness when heated even though there is practically no milk protein.

### RELATED ART REFERENCE

### Patent Literature

Patent Literature 1: Japanese Patent Application Laid-Open No. 2019-122388 A
Patent Literature 2: Japanese Patent Application Laid-Open No. 2011-000073 A
Patent Literature 3: Japanese Patent Application Laid-Open No. 2010-142181 A
Patent Literature 4: Japanese Patent Application Laid-Open No. 2018-174713 A
Patent Literature 5: Japanese Patent Application Laid-Open No. 2018-174712 A

### SUMMARY OF INVENTION

### PROBLEM TO BE SOLVED BY THE INVENTION

The imitation cheeses conventionally studied and disclosed have the following problems.

When using a vegetable protein obtained by processing or refining cereal flour or beans as shown in Patent Literatures 1 and 2, a grass smell, a grain smell, and the like, which the cereal flour and beans originally have, are easily applied to an imitation cheese. A further improvement of taste is thus sometimes required for a substitute of cheese.

In Patent Literatures 3 to 5, an imitation cheese having cheese-like appearance, processing suitability and texture can be obtained, but the stability of a gel at an acidic pH region cannot be sufficiently achieved, and the taste of cheese tends to be lost. In this regard, when adjusting pH into the same range of pH of typical cheese, the processing suitability during shredding, dicing, or the like of the resultant imitation cheese (hereinafter sometimes simply referred to as processing suitability) is deteriorated, and a texture is deteriorated. Therefore, the taste of cheese and the processing suitability and texture of cheese are in the relationship of trade-off.

Therefore, the objects of the present invention are the following three items:
(1) to provide an imitation cheese in which an odd taste derived from a vegetable material is less likely to be imparted;
(2) to provide an imitation cheese having excellent processing suitability in which during shaping the imitation cheese by shredding, dicing, cleaving, cutting, or the like, the shaped imitation cheese is not attached to another shaped imitation cheese, and during shaping, the imitation cheese does not collapse into a powder or pieces; and
(3) to provide an imitation cheese having cheese-like texture and physical properties when the imitation cheese is eaten as it is or after heating.

### MEANS FOR SOLVING PROBLEM

The inventors of the present invention intensively conducted research for solving the aforementioned problems. As a result, they found that the problems described above can be solved by an imitation cheese having the following configuration and thus achieved the present invention.
[1] An imitation cheese comprising an oil-in-water emulsion containing the following components A and B, the imitation cheese satisfying the following condition 1:
   (Component A) a whole grain ground product of high-carbohydrate beans (provided that the high-carbohydrate beans refer to beans containing 50 to 80% by mass of carbohydrate);
   (Component B) an oxidized starch (excluding an oxidized starch that has been subjected to a cross-linking treatment); and
   (Condition 1) a pH thereof is 3.0 to 5.5.
[2] The imitation cheese according to [1], wherein the component A is a whole grain ground product of high-carbohydrate beans that have been subjected to one or more selected from the group consisting of dry heat treatment and wet heat treatment.
[3] The imitation cheese according to [1] or [2], wherein the whole grain ground product of high-carbohydrate beans of the component A is a whole grain ground product of high-carbohydrate beans having NSI (nitrogen solubility index) at 55°C of 40 to 75.
[4] The imitation cheese according to any one of [1] to [3], wherein the oxidized starch of the component B is one or more selected from the group consisting of the following oxidized starch B-1 and oxidized starch B-2:
   <Oxidized starch B-1> an oxidized starch obtained using a raw material starch in which an amylopectin content is 75 to 80% by mass and an amylose content is 20 to 25% by mass; and
   <Oxidized starch B-2> an oxidized starch obtained using a raw material starch in which an amylopectin content is 81 to 85% by mass and an amylose content is 15 to 19% by mass.
[5] The imitation cheese according to any one of [1] to [4], comprising one or more of the following components C and D:
   (Component C) a starch that has been subjected to a cross-linking treatment; and
   (Component D) an acetylated starch.
[6] The imitation cheese according to [5], comprising, as the component C, a starch that has been subjected to one or more treatments selected from the group consisting of acetylation, hydroxypropylation and phosphoric acid monoesterification in addition to the cross-linking treatment.
[7] The imitation cheese according to [5] or [6], wherein a content of the component B is 2.2 to 12 parts by mass relative to 1 part by mass of the component C.
[8] The imitation cheese according to any one of [1] to [7], wherein a ratio of SFC at 25°C (Solid Fat Contents, SFC-25) to SFC at 35°C (SFC-35), SFC-25/SFC-35, of the contained fats and oils is 2.0 to 5.0.
[9] The imitation cheese according to any one of [1] to [8], comprising the following component E:
   (Component E) a water-soluble dietary fiber.
[10] A method for producing the imitation cheese according to any one of [1] to [9], comprising the following (Step 1) to (Step 5) to be performed in this order:
   (Step 1) a step of mixing a raw material containing the components A and B to obtain a preliminary emulsion;
   (Step 2) a step of adjusting a pH of the preliminary emulsion to 3.0 to 5.5;
   (Step 3) a step of homogenizing the preliminary emulsion with the pH of 3.0 to 5.5;
   (Step 4) a step of heating the homogenized preliminary emulsion with the pH of 3.0 to 5.5 to be at least 100°C or higher; and
   (Step 5) a step of cooling the preliminary emulsion that has been heated to at least 100°C or higher to be at least 20°C or lower.
[11] A food product using the imitation cheese according to any one of [1] to [9].

### EFFECT OF THE INVENTION

According to the present invention, it is possible to obtain the following advantageous effects:
(1) there can be provided an imitation cheese in which an odd taste derived from a vegetable material is less likely to be imparted;
(2) there can be provided an imitation cheese having excellent processing suitability in which during shaping the imitation cheese by shredding, dicing, cleaving, cutting, or the like, the shaped imitation cheese is not attached to another shaped imitation cheese, and during shaping, the imitation cheese does not collapse into a powder or pieces; and
(3) there can be provided an imitation cheese having cheese-like texture and physical properties when the imitation cheese is eaten as it is or after heating.

### EMBODIMENT FOR CARRYING OUT THE INVENTION

Hereinafter, the present invention will be described according to its suitable embodiments. The present invention is not limited by the following description, and each constituent element may be appropriately modified without departing from the scope of the gist of the present invention.

### [Imitation cheese]

An imitation cheese of the present invention includes an oil-in-water emulsion containing the following components A and B, and satisfies the following condition 1:
(Component A) a whole grain ground product of high-carbohydrate beans, provided that the high-carbohydrate beans refer to beans containing 50 to 80% by mass of carbohydrate;
(Component B) an oxidized starch (excluding an oxidized starch that has been subjected to a cross-linking treatment); and
(Condition 1) a pH thereof is 3.0 to 5.5.

The imitation cheese of the present invention may consist of an oil-in-water emulsion containing the components A and B, and satisfy the above-described condition 1.

### [Component A]

The imitation cheese of the present invention contains a whole grain ground product of high-carbohydrate beans. Here, the high-carbohydrate beans in the present invention refer to beans containing 50 to 80% by mass of carbohydrate.

### <High-carbohydrate beans>

Generally, "beans" refer to grains belonging to leguminosae in plant taxonomy. In particular, examples of beans corresponding to the high-carbohydrate beans used in the present invention include an adzuki bean, a kidney bean, a garden pea, a cowpea, a broad bean, a rice bean, a chickpea, a scarlet runner bean, a lima bean, a mung bean, and a lentil. Examples of beans containing less than 50% by mass of carbohydrate (hereinafter simply referred to as "low-carbohydrate beans") include a soybean.

From the viewpoint of improving the taste of the imitation cheese and not developing an odd taste, the high-carbohydrate beans containing 53 to 75% by mass of carbohydrate are preferably used, the high-carbohydrate beans containing 55 to 72% by mass of carbohydrate are more preferably used, and the high-carbohydrate beans containing 58 to 68% by mass of carbohydrate are particularly preferably used.

From the same viewpoint, the high-carbohydrate beans containing 30% by mass or less of protein are preferably used, the high-carbohydrate beans containing 27% by mass or less of protein are more preferably used, the high-carbohydrate beans containing 24 % by mass or less of protein are particularly preferably used. The lower limit of the protein content of the high-carbohydrate beans to be used is 10% by mass.

Examples of the high-carbohydrate beans that preferably satisfy the ranges of the carbohydrate content and the protein content described above include an adzuki bean, a garden pea, a rice bean, a chickpea, a scarlet runner bean, a lima bean, and a lentil. From the viewpoint of making the taste of the resultant imitation cheese richer and of maintaining the stable emulsified state even when adjusting pH to the acidic side so as to satisfy the condition 1 described later, it is preferable to use one or more types selected from a garden pea, a chickpea, a lima bean and a lentil, it is more preferable to use one or more types selected from a chickpea and a lentil, and it is particularly preferable to use a chickpea.

The carbohydrate content of beans is generally determined by subtracting the sum of separately measured amounts of protein, lipid, ash, and water from the weight of the beans. The determined content of the carbohydrate in the beans is divided by the weight of the beans, to obtain the proportion of the carbohydrate in the beans.

In the measurement of each of the amounts of protein, lipid, ash, and water in the beans, conventionally known measurement methods can be used as methods for measuring the amounts of protein, lipid, ash, and water in a food.

Examples of the measurement method for protein include the Kjeldahl method and a combustion method. Examples of the measurement method for lipid include an ether extraction method, a chloroform/methanol mixed liquid extraction method, and an acid decomposition method. Examples of the measurement method for ash include a magnesium acetate addition ashing method and a direct ashing method. Examples of the measurement method for water include the Karl Fischer method.

The carbohydrate content and the protein content in the high-carbohydrate beans or low-carbohydrate beans in the present invention can be determined by measuring the carbohydrate amount in a product dried such that the water content of each of the beans in a whole grain state is at least 18% by mass or less.

In production of the imitation cheese of the present invention, the high-carbohydrate beans are used in the form of the whole grain ground product as described below. From the viewpoint of obtaining an imitation cheese having a favorable taste, high-carbohydrate beans that have been subjected to a heat treatment are preferably selected.

A method for the heat treatment is not particularly limited. For example, a dry heating (also referred to as dry heat treatment) process using a roasting device, a hot air heating device, a microwave heating device, or the like, or a wet heating (also referred to as wet heat treatment) process using a humidifying and heating device, a steaming device, a steam heating device, or the like can be employed. When using high-carbohydrate beans that have been subjected to the dry heating process, a roasting aroma, which is not originally felt in cheese, may be imparted to an imitation cheese. Therefore, high-carbohydrate beans that have been subjected to the wet heating process are preferably selected, and in particular, high-carbohydrate beans that have been subjected to a steam heating are preferably selected.

The heating condition of the heat treatment described above such as heating temperature and time is not particularly limited. It is suitable that the temperature is set such that the product temperature falls within a range of 60 to 100°C, and a heating time is 1 minute to 10 hours.

For example, there can be employed a method in which chickpeas, the high-carbohydrate beans, are placed in a sealing tank, and the inside of a jacket covering the outside of the sealing tank is heated under an atmosphere of a relative humidity of 90% or more such that the product temperature falls within a range of about 60 to 95°C.

### <Whole grain ground product>

The high-carbohydrate beans described above are used in the form of a whole grain ground product in the production of the imitation cheese of the present invention. Thus, the imitation cheese of the present invention contains the whole grain ground product of high-carbohydrate beans.

The whole grain ground product of high-carbohydrate beans in the present invention refers to a powder or paste of the high-carbohydrate beans that is obtained by dry grinding or wet grinding the whole grain of the high-carbohydrate beans including the hypocotyl, seed coat, and the like of the high-carbohydrate beans. The whole grain ground product of high-carbohydrate beans in the present invention is not the one that has been subjected to fractionation or classification before and after the grinding.

A method for grinding the whole grain of the high-carbohydrate beans is not limited, and the whole grain may be ground by any grinding method. For example, the high-carbohydrate beans which are dry ground using a dry grinding device such as a pin mill, a blade mill, a ball mill, or a jet mill and the high-carbohydrate beans which are wet ground using a wet grinding device such as a grinder or a colloid mill can be used in the production of the imitation cheese of the present invention. For the wet grinding, dried high-carbohydrate beans are immersed in water at 5 to 35°C for 30 minutes to 12 hours, and then are subjected to wet grinding.

From the viewpoint of obtaining an imitation cheese having a smooth and favorably soft texture and preferably achieving cheese-like physical properties, the whole grain ground product of the high-carbohydrate beans is preferably one that is micronized such that the median diameter falls within the range of 10 to 300 µm. In the present invention, the median diameter refers to the particle diameter at 50% of cumulative volume particle size distribution obtained by measurement with a laser diffraction particle size distribution measuring device (for example LMS-2000e (manufactured by SEISHIN ENTERPRISE Co., Ltd.) or SALD-2300 (manufactured by Shimadzu Corporation)).

From the above-mentioned viewpoint, the median diameter of the whole grain ground product of the high-carbohydrate beans is preferably 10 to 250 µm, more preferably 10 to 200 µm.

The whole grain ground product in which the median diameter falls within the above-mentioned range and the particle diameter at 90% of cumulative volume particle size distribution is 500 µm or less is further preferred.

In the case of using a wet ground product as the whole grain ground product in the present invention, the grinding is performed after adjusting so that relative to 1 part by mass of dried high-carbohydrate beans, the total amount of the dried high-carbohydrate beans and water (the sum of the amount of water absorbed by the high-carbohydrate beans in the immersion and the amount of water added if necessary) is preferably 1.5 to 2.5, more preferably 1.7 to 2.4, particularly preferably 1.8 to 2.3, from the viewpoint of adaptability in the subsequent production of the imitation cheese.

In the present invention, from the viewpoint of obtaining a stronger cheese taste, the water content of the imitation cheese preferably satisfies the range described below. From the viewpoint of increasing the degree of freedom of blend, the dry ground high-carbohydrate beans (hereinafter referred to as the whole grain of the high-carbohydrate beans) are preferably selected and used in the production of the imitation cheese.

From the viewpoint of improving emulsion stability of the resultant imitation cheese and improving the processing suitability of the imitation cheese, the whole grain of the high-carbohydrate beans having NSI at 55°C of 40 to 75 is preferably used as the whole grain of the high-carbohydrate beans.

The nitrogen solubility index (NSI) represents the ratio (% by mass) of water-soluble nitrogen in the whole amount of nitrogen. In the present invention, NSI at 55°C is a value measured by the following method.

### (Method for measuring NSI)

Into 1 g of a sample, 39 mL of water is added and stirred to prepare a sample liquid. Subsequently, the sample liquid is heated with stirring using a stirrer in a hot water bath set at 55°C. The heating with stirring is performed for 15 minutes after the temperature of the sample liquid reaches 55°C.

After completion of the heating, the sample liquid is stirred at 30°C for 2 hours using a rotator, and centrifuged (430 G) at 1,500 rpm for 10 minutes using a swinging rotor. After that, the supernatant is collected by decantation.

The nitrogen content in the collected supernatant and the bulk is measured by the Dumas method, and the proportion of nitrogen (water-soluble nitrogen) of the supernatant relative to whole nitrogen of the sample is represented in unit of % by mass as NSI at 55°C in the present invention.

In one embodiment, NSI at 55°C is preferably 45 to 75, more preferably 48 to 72, still more preferably 53 to 70.

The content of the whole grain ground product of the high-carbohydrate beans as the solid content in the imitation cheese of the present invention is, for example, 0.8 to 15% by mass, preferably 1 to 15% by mass, more preferably 1.5 to 12.0% by mass, still more preferably 2.0 to 9.0% by mass, particularly preferably 2.5 to 6.0% by mass.

When the content of the whole grain ground product of the high-carbohydrate beans in the imitation cheese of the present invention falls within the above-mentioned range, an imitation cheese having a suppressed odd taste and a smooth texture can be obtained. Even when adjusting pH into an acidic side so as to satisfy the condition 1 described below, an imitation cheese having favorable emulsion stability and preferable processing suitability can be obtained.

In the present invention, when using a protein material obtained by collecting or extracting a protein component as a main component from the high-carbohydrate beans or the low-carbohydrate beans (e.g., separated soybean protein, powdered soybean protein, and powdered chickpea protein), the emulsion stability is likely to be improved at pH near a neutral pH, and the physical properties of the imitation cheese are likely to become cheese-like physical properties.

However, since the protein material itself has distinctive odor, the taste of the resultant imitation cheese is deteriorated, and emulsion stability is deteriorated at a decreased pH. Therefore, the processing suitability of the imitation cheese is unfavorable, and a cheese-like taste is not sufficiently obtained.

Accordingly, the amount of the protein material obtained by collecting or extracting a protein component as a main component from the beans is preferably 5% by mass or less in the imitation cheese of the present invention. Examples of the protein material obtained by collecting or extracting a protein component as a main component from the beans include a material containing 60% by mass or more of protein. The protein material may be a material containing a carbohydrate and the like in addition to a protein.

### [Component B]

In the present invention, an oxidized starch (excluding an oxidized starch that has been subjected to a cross-linking treatment) is contained. The oxidized starch refers to those obtained by oxidizing a raw material starch with sodium hypochlorite.

The type of the raw material starch for the oxidized starch used in the present invention is not particularly limited. Examples thereof include a waxy corn-derived starch, a corn-derived starch, a tapioca-derived starch, a wheat-derived starch, a sweet potato-derived starch, a potato-derived starch, a sago-derived starch, and a rice-derived starch. As these raw material starches, one type thereof may be solely used, and two or more types thereof may also be used in combination.

The oxidized starch may be solely used, or two or more types of the oxidized starches may be used in combination. Two or more oxidized starches that are the same type and have different oxidative degrees may be used in combination.

From the viewpoint of improving the processing suitability of the resultant imitation cheese and achieving cheese-like texture and physical properties, the oxidized starch used in the present invention preferably contains one or more selected from the group consisting of the following oxidized starches B-1 and B-2.

### <Oxidized starch B-1>

An oxidized starch obtained using a raw material starch in which the amylopectin content is 75 to 80% by mass and the amylose content is 20 to 25% by mass.

### <Oxidized starch B-2>

An oxidized starch obtained using a raw material starch in which the amylopectin content is 81 to 85% by mass and the amylose content is 15 to 19% by mass.

Examples of those corresponding to the oxidized starch B-1 described above include oxidized starches obtained using as the raw material starch a non-glutinous rice starch, a potato starch, a wheat starch, a cone starch and a kudzu starch.

Examples of those corresponding to the oxidized starch B-2 described above include an oxidized starch obtained using as the raw material starch a tapioca starch.

In the imitation cheese of the present invention, the oxidized starch B-1 and the oxidized starch B-2 described above may be used in any combination. As a preferred embodiment of the present invention, the following cases (I) and (II) are described.
(I) a case where the oxidized starch alone is contained.
(II) a case where the oxidized starch is used in combination with one or more of components C and D described below.

First, the above-mentioned case (I) will be described.

When the imitation cheese of the present invention contains the oxidized starch alone, both of the oxidized starch B-1 and the oxidized starch B-2 are preferably contained. When using both of the oxidized starches, the resultant imitation cheese tends to obtain preferable processing suitability, texture, and favorable heat meltability as compared with a case where any one of oxidized starch is used.

When both the oxidized starch B-1 and the oxidized starch B-2 described above are used, from the viewpoint of keeping balance between preferable processing suitability and a texture and high heat meltability after heating, it is preferable that the content of the oxidized starch B-1 is higher than the content of the oxidized starch B-2. Specifically, the content of the oxidized starch B-1 is preferably 3.0 to 8.0 parts by mass, more preferably 3.3 to 7.8 parts by mass, still more preferably 3.6 to 7.6 parts by mass, particularly preferably 3.8 to 7.4 parts by mass, relative to 1 part by mass of the oxidized starch B-2 in the imitation cheese of the present invention.

Next, the above-mentioned case (II) will be described.

Even when using the oxidized starch in combination with one or more of the components C and D in the imitation cheese of the present invention, both of the oxidized starch B-1 and the oxidized starch B-2 can be contained, but an effect achieved by containing the oxidized starches reaches its limit. Accordingly, any one of the oxidized starch B-1 or B-2 is preferably contained, and in particular, from the viewpoint of improving processing suitability, the oxidized starch B-1 is preferably contained.

When using the oxidized starch in combination with the component C described later, from the viewpoint of improving the processing suitability of the resultant imitation cheese and improving a cheese-like texture and the emulsion stability at an acidic pH region of the imitation cheese, the content of the oxidized starch of the component B is usually 2.2 to 75 parts by mass, preferably 2.2 to 12 parts by mass, more preferably 2.2 to 11.0 parts by mass, still more preferably 2.2 to 10.0 parts by mass, further preferably 2.8 to 9.0 parts by mass, particularly preferably 3.0 to 8.5 parts by mass, relative to 1 part by mass of a starch that has been subjected to a cross-linking treatment of the component C.

Also, when using the oxidized starch in combination with the component D, from the same viewpoint, the content of the oxidized starch of the component B is preferably 2.0 to 15 parts by mass, more preferably 4.0 to 15 parts by mass, still more preferably 6.0 to 15 parts by mass, further preferably 8.0 to 15 parts by mass, particularly preferably 10.0 to 15 parts by mass, relative to 1 part by mass of an acetylated starch of the content of the component D.

In both of the cases (I) and (II), when using a plurality of types of oxidized starches corresponding to any of the oxidized starch B-1 or B-2(for example, when using oxidized starches produced from different raw material starches, or when using oxidized starches having different process degrees), when using a plurality of types of the components C, or when using a plurality of types of the components D, the above-described mass ratio is calculated using, as the content of each component, the sum of the contents of the components corresponding to the respective components.

In both of the cases (I) and (II), from the viewpoint of improving the processing suitability of the resultant imitation cheese and obtaining cheese-like physical properties in which appropriate melting is achieved by heating in an oven, the imitation cheese of the present invention preferably contains an oxidized starch produced using a potato-derived raw material starch as the oxidized starch B-1.

The content of the oxidized starch in the imitation cheese of the present invention can be arbitrarily changed depending on a desired texture and hardness of the imitation cheese.

For example, in the above-described case (I), the content of the oxidized starch in the imitation cheese of the present invention may be 15 to 35% by mass, or 17 to 35% by mass. From the viewpoint of obtaining an imitation cheese having favorable processing suitability and obtaining cheese-like physical properties during heating of the resultant imitation cheese, the content is preferably 17 to 33% by mass, more preferably 17 to 30% by mass, still more preferably 17 to 27% by mass, particularly preferably 17 to 25% by mass.

In the above-described case (II), the content of the oxidized starch in the imitation cheese of the present invention may be 3 to 24% by mass, or 5 to 24% by mass. From the viewpoint of obtaining an imitation cheese having favorable processing suitability and obtaining cheese-like physical properties during heating of the resultant imitation cheese, the content is preferably 7 to 24% by mass, more preferably 9 to 21% by mass, still more preferably 11 to 18% by mass, particularly preferably 12 to 15% by mass.

### [Component C]

There will be described a starch that has been subjected to a cross-linking treatment (hereinafter sometimes simply referred to as cross-linked starch), which is preferably contained in the present invention.

The cross-linked starch is obtained by cross-linking a sugar chain of a raw material starch through a cross-linking treatment such as an adipic acid cross-linking treatment or a phosphoric acid cross-linking treatment in which esterification is performed with sodium trimetaphosphate or the like.

When using the cross-linked starch, the emulsion stability at an acidic pH region of the imitation cheese is unlikely to be deteriorated, and the resultant imitation cheese has a favorable texture. A cheese-like taste is also easily obtained. Furthermore, the imitation cheese having preferable processing suitability is easily obtained.

The cross-linked starch preferably used in the present invention is preferably a starch that has been subjected to one or more treatments selected from the group consisting of acetylation, hydroxypropylation and phosphoric acid monoesterification in addition to the cross-linking treatment. Examples of the starch include distarch phosphate (phosphoric acid cross-linked starch), phosphated distarch phosphate (phosphated phosphoric acid cross-linked starch), and hydroxypropyl distarch phosphate (hydroxypropylated phosphoric acid cross-linked starch). Among these, distarch phosphate, phosphated distarch phosphate, or hydroxypropyl distarch phosphate is preferably used, phosphated distarch phosphate, or hydroxypropyl distarch phosphate is more preferably used, and hydroxypropyl distarch phosphate is still more preferably used.

The type of a raw material starch for the cross-linked starch preferably used in the present invention is not particularly limited. Examples thereof include a waxy corn-derived starch, a corn-derived starch, a tapioca-derived starch, a wheat-derived starch, a sweet potato-derived starch, a potato-derived starch, a sago-derived starch, and a rice-derived starch. As these raw material starches, one type thereof may be solely used, and two or more types thereof may also be used in combination.

From the viewpoint of improving the processing suitability of the resultant imitation cheese and obtaining cheese-like physical properties in which appropriate melting is achieved by heating in an oven, in the imitation cheese of the present invention, a cross-linked starch produced using a corn-derived raw material starch is preferably selected.

From the viewpoint of improving the processing suitability of the resultant imitation cheese, the proportion of amylose in the raw material starch for the cross-linked starch used in the present invention is preferably 20 to 25%.

The cross-linked starch may be solely used, or two or more types of the cross-linked starches may be used in combination. Two or more cross-linked starches that are the same type of cross-linked starch, but have different cross-linking degrees, or two or more cross-linked starches that are the same type of cross-linked starch, but are subjected to an additional treatment at different extents may be used in combination.

The content of the cross-linked starch in the imitation cheese of the present invention can be arbitrarily changed depending on a desired texture and hardness of the imitation cheese, and is, for example, 0.1 to 8% by mass or 0.2 to 8% by mass. From the viewpoint of obtaining an imitation cheese having favorable processing suitability and obtaining cheese-like physical properties during heating of the resultant imitation cheese, the content is preferably 0.5 to 8% by mass, more preferably 1 to 7% by mass, still more preferably 1.5 to 6% by mass, particularly preferably 2 to 5% by mass.

### [Component D]

There will be described an acetylated starch that is preferably contained in the present invention.

An acetylated starch is one processed starch obtained by acetylating a raw material starch with acetic acid or acetic anhydride. In the present invention, the acetylated starch, particularly an acid-treated acetylated starch is preferably used.

The acid-treated acetylated starch is a starch obtained by subjecting a raw material starch to an acid treatment with an acid such as hydrochloric acid or sulfuric acid and an acetylation treatment with acetic acid or acetic anhydride. An acid-treated acetylated starch preferably used as an acetylated starch in the present invention may be a starch obtained by acetylating an acid-treated starch, or a starch obtained by treating an acetylated starch with an acid. A starch that has been subjected to, for example, etherification, an enzymatic treatment, or a cross-linking treatment may be used as long as it is a starch that has been acid-treated and acetylated.

It is noted that the acid-treated starch is a processed starch obtained by treating a raw material starch with an acid such as hydrochloric acid or sulfuric acid. Specifically, the acid-treated starch is a processed starch in which a starch chain is partially decomposed by an action of an acid into small molecules. On the other hand, an oxidized starch is obtained by oxidizing a raw material starch with an oxidizing agent such as sodium hypochlorite, and is a processed starch different from the acid-treated starch.

When using a processed starch that has been subjected to both of an acetylation treatment and a cross-linking treatment, the processed starch is classified as an acetylated starch in the present invention.

The type of a raw material starch for the acetylated starch preferably used in the present invention is not particularly limited. Examples thereof include a waxy corn-derived starch, a corn-derived starch, a tapioca-derived starch, a wheat-derived starch, a sweet potato-derived starch, a potato-derived starch, a sago-derived starch, and a rice-derived starch. As these raw material starches, one type thereof may be solely used, and two or more types thereof may also be used in combination. In the present invention, a potato-derived starch is particularly preferably used as the raw material starch.

The content of the acetylated starch in the imitation cheese of the present invention can be arbitrarily changed depending on a desired texture and hardness of the imitation cheese, and is, for example, 0.5 to 17% by mass or 0.5 to 16% by mass. From the viewpoint of obtaining an imitation cheese having favorable processing suitability and obtaining cheese-like physical properties during heating of the resultant imitation cheese, the effective amount thereof is preferably 0.5 to 15% by mass, more preferably 0.5 to 11% by mass, still more preferably 0.5 to 7% by mass, particularly preferably 0.5 to 4% by mass.

### [Component E]

The imitation cheese of the present invention preferably contains a water-soluble dietary fiber as a component E. When containing the water-soluble dietary fiber, processing suitability can be improved. In addition to this, a cheese-like texture can be improved, and emulsion stability can be improved.

As conventionally known, dietary fibers are nutritionally defined as the "totality of indigestible components in a food that is not digested by human digestive enzymes", and classified into a water-soluble dietary fiber and an insoluble dietary fiber. The imitation cheese of the present invention preferably contains the water-soluble dietary fiber among these.

Examples of water-soluble dietary fibers that can be used in the present invention include polydextrose, alginic acid, an alginic acid salt, pectin, glucomannan, agar (agarose), xanthan gum, locust bean gum, methyl cellulose, carboxymethyl cellulose, guar gum, inulin, isomaltodextrin, and indigestible dextrin.

The content of the water-soluble dietary fiber in the imitation cheese of the present invention is, for example, 0 to 2.5% by mass, preferably 0.1 to 2.5% by mass, more preferably 0.15 to 2.0% by mass, still more preferably 0.2 to 1.5% by mass, particularly preferably 0.25 to 1.0% by mass.

By containing the water-soluble dietary fiber into the imitation cheese of the present invention, even when adjusting pH into an acidic side so as to satisfy the condition 1 described below, the imitation cheese having preferable processing suitability can be easily obtained, a cheese-like texture can be improved, and emulsion stability can be improved.

From the viewpoint of improving the processing suitability and improving a texture when the imitation cheese is eaten as it is without heating, agar is particularly preferably used as the water-soluble dietary fiber in the present invention.

Agar usable in the present invention is not particularly limited, and may be agar conventionally used for a food product. Examples of the agar include agar obtained by extraction from red seaweeds such as Gelidium elegans or Gracilaria vermiculophylla.

The agar includes, for example, an agar strip, an agar block, an agar flake, and an agar powder. Agar having physical properties modified through any method can also be used. Examples of the agar having modified physical properties include agar having increased gel strength, agar having reduced gel strength, agar having increased viscoelasticity, agar having reduced viscoelasticity, agar having an increased melting point, and agar having a reduced melting point. Among these, one or two or more types of agars can be used without particular limitation in the present invention.

The agar used in the imitation cheese of the present invention is not limited as long as it can be used for a food product, and may be an agar strip, an agar block, an agar flake, or an agar powder that are obtained by extraction from red seaweeds such as Gelidium elegans, Gracilaria vermiculophylla, or Ahnfeltia plicata, or agar processed through a variety of production technique. One or more types of the agars can be used.

When using the agar as the water-soluble dietary fiber in the present invention, the lower limit of jelly strength thereof is preferably 500 to 2,000 g/cm², more preferably 550 to 1,700 g/cm², or 600 to 1,400 g/cm², particularly preferably 630 to 1,000 g/cm².

It is noted that the jelly strength is based on a value measured by Nikkansui method, that is, a measurement method in which a 1.5% solution of agar is prepared and left at 20°C for 15 hours resultant in coagulation, and the maximum load (g) per square centimeter that is applied to the surface of the obtained gel and withstood by the gel for 20 seconds is defined as a jelly strength.

When agar having a jelly strength of 500 to 2,000 g/cm² is used for the imitation cheese of the present invention, an imitation cheese having preferable processing suitability can be easily obtained, and an imitation cheese preferably having a cheese-like texture felt by the teeth or tongue even when the imitation cheese is eaten as it is without heating can be obtained.

### [Fat and oil to be contained]

The present invention provides an imitation cheese including an oil-in-water emulsion containing the above-described components A and B. The imitation cheese contains a fat and oil.

The fat and oil used in the production of the imitation cheese of the present invention is not particularly limited. Examples thereof include vegetable fats and oils such as a palm oil, a palm kernel oil, a coconut oil, a corn oil, a cottonseed oil, a soybean oil, a rapeseed oil, a high erucic acid rapeseed oil, a rice oil, a sesame oil, a safflower oil, a peanut oil, a sunflower oil, a high oleic sunflower oil, a safflower oil, a high oleic safflower oil, a canola oil, a kapok oil, an evening primrose oil, an olive oil, a shea butter, a sal fat, Kokum butter, illipe butter, and cacao butter; animal fats and oils such as milk fat, beef tallow, pork fat, and whale oil; and processed fats and oils obtained by subjecting any of these vegetable fats and oils and animal fats and oils to one or two or more treatments selected from hydrogenation, fractionation, and interesterification. These fats and oils may be solely used, or two or more types thereof may also be used in combination.

The oil content in the imitation cheese of the present invention is, for example, 10 to 40% by mass, further 10 to 35% by mass, preferably 13 to 28% by mass, more preferably 15 to 28% by mass, still more preferably 17 to 28% by mass, particularly preferably 20 to 28% by mass.

When the oil content satisfies this range, the emulsion stability in the production process of the imitation cheese can be significantly improved, and it is easier to avoid oil-water separation, as well as to avoid formation of sticky surface and sticky texture of the resultant imitation cheese. It also facilitates improvement in the processing suitability of the resultant imitation cheese.

If the imitation cheese of the present invention contains other components described below that contain fats and oils, the fats and oils contained in those components shall also be included in the above-described oil content.

From the viewpoint of both improving the processing suitability and obtaining a cheese-like texture with or without heating, the ratio of SFC at 25°C (Solid Fat Contents, SFC-25) to SFC at 35°C (SFC-35), SFC-25/SFC-35, of the fats and oils contained in the imitation cheese of the present invention is preferably 2.0 to 5.0, more preferably 2.2 to 4.5, still more preferably 2.4 to 3.5, particularly preferably 2.6 to 3.2.

The value of the solid fat content SFC indicates the content of a solid fat in fats and oils at a given temperature, and can be measured by conventional methods. In the present invention, the SFC of the sample to be measured is measured by the pulse NMR (direct method) described in cd16b-93 of the AOCS official method, and then the measured value is converted into the amount of oil phase to be regarded as the SFC value. In other words, when a sample without an aqueous phase is measured, the measured value itself is regarded as the SFC, and when a sample with an aqueous phase is measured, the value obtained by converting the measured value to the amount of oil phase is regarded as the SFC.

Furthermore, from the viewpoint of obtaining an imitation cheese having a cheese-like texture and physical properties not only when eaten as it is but also when eaten after heating, the proportion of lauric acid residue (hereinafter simply described as La) to saturated fatty acid residues in the fatty acid residue composition of the contained fat and oil is preferably 28% by mass or more, more preferably 31% by mass or more, still further preferably 34% by mass or more, particularly preferably 37% by mass or more. It is noted that the upper limit thereof is 55% by mass.

Furthermore, from the viewpoint of obtaining an imitation cheese having a cheese-like texture and physical properties not only when eaten as it is but also when eaten after heating, the content of the saturated fatty acid residues in the fatty acid residue composition of the contained fat and oil is preferably 50% by mass or more, more preferably 70% by mass or more, still further preferably 80% by mass or more, particularly preferably 85% by mass or more. It is noted that the upper limit thereof is 100% by mass.

In the present invention, the fatty acid residue composition can be measured by capillary gas chromatography with reference to, for example, "2.4.2.3-2013 of Standard Methods for the Analysis of Fats, Oils and Related Materials established by Japan Oil Chemists' Society", "2.4.4.3-2013 of Standard Methods for the Analysis of Fats, Oils and Related Materials established by Japan Oil Chemists' Society", and "AOCS official method Ce-1h05".

In the imitation cheese of the present invention, it is preferable to contain the following fat and oil α and fat and oil β from the viewpoint of suppressing changes in physical properties and appearance over time, in addition to favorably meeting the above-described conditions related to fats and oils and obtaining the advantageous effects of the present invention.

### <Fat and oil α>

The fat and oil α is a random interesterified fat and oil that satisfies the following conditions (α1) to (α3).

### - Condition (α1) -

The condition (α1) relates to the proportion of La in the fatty acid residue composition.

From the viewpoint of obtaining an imitation cheese with both favorable processing suitability and texture, and also obtaining an imitation cheese with good taste and melt-in-the-mouth feeling, the proportion of La in the fatty acid composition of the fat and oil α is preferably 15% by mass or more, more preferably 17% by mass or more, further preferably 19% by mass or more, particularly preferably 21% by mass or more. It is noted that the upper limit thereof is 40% by mass from the viewpoint of preferably satisfying the conditions α2 and α3 described below.

### - Condition (α2) -

The condition (α2) relates to the mass ratio [La/(St+P)] of the content of La to the sum of the contents of stearic acid residues (hereinafter referred to as St) and palmitic acid residues (hereinafter referred to as P) in the fatty acid residue composition.

From the viewpoint of obtaining an imitation cheese with both favorable processing suitability and texture, and also obtaining an imitation cheese with good taste and melt-in-the-mouth feeling, the mass ratio [La/(St+P)] of the fat and oil α is preferably 0.12 or more, more preferably 0.35 or more, still more preferably 0.38 or more, particularly preferably 0.40 or more. The upper limit of the mass ratio is preferably 1.40 or less, more preferably 1.20 or less, still more preferably 1.15 or less, particularly preferably 1.10 or less.

### - Condition (α3) -

The condition (α3) relates to the amount of trilaurin in the triglyceride composition.

The content of trilaurin (hereinafter also referred to as LaLaLa) in the fat and oil α preferably falls within a range of 1 to 10% by mass.

Trilaurin refers to a triglyceride in which all three fatty acid residues bonded to the glycerol skeleton are La.

From the viewpoint of improving the texture, such as suppressing a rough texture when the imitation cheese of the present invention is eaten as it is, and also from the viewpoint of improving the physical properties, such as obtaining cheese-like physical properties when the imitation cheese is heated and eaten, the trilaurin content in the triglyceride composition of the fat and oil α is more preferably 1.0 to 9.0% by mass, still more preferably 1.0 to 7.0% by mass, particularly preferably 1.0 to 5.5% by mass.

Although it is possible to improve the texture and physical properties of the resultant imitation cheese even if the content of trilaurin in the triglycerides constituting the fat and oil α is less than 1% by mass, it is difficult from an industrial production standpoint to reduce the content of trilaurin to less than 1% by mass while the fat and oil α satisfies the conditions (α1) and (α2).

In the present invention, the triglyceride composition can be measured by capillary gas chromatography with reference to, for example, "2.4.2.3-2013 of Standard Methods for the Analysis of Fats, Oils and Related Materials established by Japan Oil Chemists' Society", "2.4.4.3-2013 of Standard Methods for the Analysis of Fats, Oils and Related Materials established by Japan Oil Chemists' Society", and "AOCS official method Ce-1h05".

The fat and oil α preferably used in the present invention is not particularly limited as long as it is a random interesterified fat and oil that satisfies the above-mentioned conditions (α1) to (α3). For example, one or two or more types of fats and oils obtained by random interesterifying, in accordance with conventional methods, a mixture of a palm kernel oil and an fully hydrogenated palm oil with an iodine value of 1 or less, in a mass ratio of 40 to 80:20 to 60 in terms of the former to the latter can be preferably used.

### <Fat and oil β>

The fat and oil β is a non-interesterified fat and oil that satisfies the following conditions (β1) to (β3).

In the present application, the "non-interesterified fat and oil" refers to a refined fat and oil obtained through a refining step of a conventional method after oil extraction, or a processed fat and oil obtained by hydrogenation and fractionation of refined fats and oils where the processing method does not involve interesterification such as position-specific interesterification or random interesterification.

### - Condition (β1) -

The content of the lauric acid residue in the fatty acid residue composition in the fat and oil β is preferably in the range of 35% by mass or more from the viewpoint of obtaining an imitation cheese having favorable processing suitability and the like.

The content thereof is more preferably in the range of 40 to 70% by mass, still more preferably 43 to 66% by mass, particularly preferably 48 to 62% by mass.

### - Condition (β2) -

From the viewpoint of obtaining an imitation cheese having favorable processing suitability, it is preferable that [La/(St+P)] in the fatty acid residue composition of the fat and oil β is in the range of 2.00 to 6.20.

The mass ratio is more preferably in the range of 2.70 to 6.00, still more preferably 3.50 to 5.80, particularly preferably 4.30 to 5.70.

### - Condition (β3) -

Furthermore, from the viewpoint of obtaining an imitation cheese having favorable processing suitability and the like, the content of trilaurin in the constituent triglyceride composition of the fat and oil β is preferably 15 to 35% by mass, more preferably 18 to 32% by mass, and still more preferably 20 to 29% by mass.

The upper limit of the iodine value of the fat and oil β used in the present invention is preferably 15 or less, more preferably 13 or less, still more preferably 10 or less, and the lower limit of the iodine value of the fat and oil β is preferably 3 or more, more preferably 5 or more, still more preferably 7 or more.

As a method of adjusting the iodine value within the above-mentioned range, a method such as hydrogenation and fractionation can be employed.

The non-interesterified fat and oil containing 35% by mass or more of lauric acid residue in the fatty acid residue composition is not particularly limited, and can be used as the fat and oil β. Preferred examples of the fat and oil β include a palm kernel oil, a coconut oil, and processed fats and oils obtained by subjecting these fats and oils to one or two treatments selected from hydrogenation and fractionation.

### <Content of fat and oil α and fat and oil β>

The content of the fat and oil α in the fats and oils in the imitation cheese of the present invention is preferably 40 to 80% by mass, more preferably 45 to 75% by mass, still more preferably 50 to 70% by mass, particularly preferably 55 to 65% by mass.

The content of the fat and oil β in the fats and oils in the imitation cheese of the present invention is preferably 20 to 60% by mass, more preferably 25 to 55% by mass, still more preferably 30 to 50% by mass, particularly preferably 35 to 45% by mass.

The content of the other fats and oils other than the fat and oil α and the fat and oil β in the fats and oils in the imitation cheese of the present invention is preferably 15% by mass or less, more preferably 10% by mass or less, still more preferably 5% by mass or less, and the imitation cheese particularly preferably does not contain any other fats and oils other than the fat and oil α and the fat and oil β.

### <Water>

There will be described the water in the imitation cheese of the present invention.

The water that can be used for producing the imitation cheese of the present invention is not particularly limited, and examples thereof include tap water and mineral water.

The water content of the imitation cheese of the present invention is usually 25 to 62% by mass, preferably 25 to 60% by mass, more preferably 32 to 60% by mass, still more preferably 38 to 60% by mass, particularly preferably 45 to 60% by mass. When the water content falls within this range, it is possible to significantly increase the emulsion stability in the production process of the imitation cheese, it is easy to avoid the occurrence of oil-water separation, it is easy to avoid the formation of the sticky surface of the resultant imitation cheese and the sticky texture, and it is easy to enhance the processing suitability of the resultant imitation cheese. In the case where the imitation cheese of the present invention contains other components containing water described later, the water contents contained in the components are included in the above-described water content.

### [Condition 1]

The imitation cheese of the present invention satisfies the following condition 1:
(Condition 1) the pH thereof is 3.0 to 5.5.

The pH of the imitation cheese of the present invention is 3.0 to 5.5, as described above. If the pH of the imitation cheese is less than 3.0, there would be a tendency that the texture and processing suitability deteriorate as the emulsification becomes unstable in addition to the tendency in which the sourness would be too strong to impair the taste. If the pH thereof is more than 5.5, it is difficult for the resultant imitation cheese to have a sufficient cheese-like taste even when a flavoring ingredient or the like is used.

From the viewpoint of obtaining the cheese-like taste of the imitation cheese more preferably and improving the emulsion stability, the pH of the imitation cheese of the present invention is adjusted to be preferably 3.2 to 5.2, more preferably 3.3 to 4.9, still more preferably 3.4 to 4.7, particularly preferably 3.5 to 4.5.

The pH of the imitation cheese of the present invention can be measured by arbitrary method. The pH in the form of a preliminary emulsion immediately before the heating treatment in the production process of the imitation cheese as described later or the pH measured using a pH tester for cheese with respect to the imitation cheese of the present invention can be regarded as the pH of the imitation cheese of the present invention. In the present invention, the preliminary emulsion comprises a preliminary emulsified liquid. When the pH of the imitation cheese of the present invention is measured in the form of a preliminary emulsion, the pH in the form of a preliminary emulsion immediately before the heating treatment may be specifically a pH that is adjusted in a step of adjusting the pH of the preliminary emulsion before the heating treatment, and may be, for example, the pH of the preliminary emulsion that has been subjected to pH adjustment and homogenization before the heating treatment. For example, the pH can be measured by piercing, with a pH measuring instrument or the like, a preliminary emulsion controlled to room temperature (20 to 30°C).

When adjusting the pH of the imitation cheese of the present invention into the above-described range, from the viewpoint of improving the taste of the imitation cheese of the present invention, it is preferable to use an organic acid or a food material containing an organic acid, or to perform organic acid fermentation.

Examples of the organic acid that can be contained in the imitation cheese of the present invention include adipic acid, citric acid, gluconic acid, succinic acid, acetic acid, tartaric acid, lactic acid (including fermented lactic acid), fumaric acid, malic acid, phosphoric acid, and phytic acid.

Examples of the food material containing an organic acid that can be contained in the imitation cheese of the present invention include: fruits and juices of such as orange, strawberry, grape, lemon, pineapple and apple; fermented foods such as cheese, fermented milk and vinegar; coffee; pastes and puree of these foods; and processed products such as jams.

These organic acids or food materials containing organic acids can be solely used or two or more thereof may be used in combination, and the blending amounts can be appropriately adjusted so that the pH of the resultant product falls within the above-mentioned pH range.

### [Condition 2]

In addition to the above-mentioned condition 1, the imitation cheese of the present invention preferably further satisfies the following condition 2:
(Condition 2) The protein content is 3% by mass or less.

When the condition 2 is satisfied, even if the pH is lowered in order to make the taste of the resultant imitation cheese closer to the cheese-like taste, precipitation and aggregation derived from the protein in the imitation cheese are less likely to occur, and the texture of the imitation cheese becomes better.

When the imitation cheese of the present invention contains the above-mentioned components A to C, preferably the above-mentioned components A to D, in predetermined content ranges, the emulsification can be stably maintained even if the content of the protein is small. The protein content may be more preferably 2.7% by mass or less, still more preferably 2.4% by mass or less, particularly preferably 2.0% by mass or less.

The lower limit value of the protein content in the imitation cheese of the present invention is preferably 0.01% by mass, more preferably 0.05% by mass, still more preferably 0.1% by mass, particularly preferably 0.3% by mass.

### [Other components]

Other components that can be included in the imitation cheese of the present invention will be described.

Examples of other components include food raw materials and food additives, such as sugars (e.g., sugar, trehalose), a sugar alcohol, a high-intensity sweetener, a salting agent such as common salt and potassium chloride, a seasoning (e.g., amino acids such as sodium glutamate), a spice, a thickening stabilizer, an emulsifier, a coloring agent such as β-carotene and caramel, a flavoring agent, an antioxidant such as tocopherol, a food preservative, a shelf life enhancer, a protein raw material other than beans, fruits and vegetables and fruit pulps and fruit juices, a fruit, seeds, grains, milk products such as milk and cheese, plant milk, coffee, cacao mass, cocoa powder, and alcoholic beverages (e.g., wine). One type or two or more types of these other raw materials may be contained.

The content of the other raw materials used in the imitation cheese of the present invention is preferably 25% by mass or less, more preferably 20% by mass or less.

As the other components, it is also possible to include starches other than the component A and the component B, that is, starches not subjected to crosslinking treatment or oxidation treatment (untreated starch or raw starch). The content of such starch in the imitation cheese may be, for example, 0 to 10% by mass, but is preferably 0 to 7% by mass, more preferably 0 to 5% by mass, still more preferably 0 to 3% by mass, particularly preferably not contained, from the viewpoint of texture, processing suitability, and the like.

In the present invention, in particular, plant milks among the above-mentioned other components can be contained to improve the taste of the resultant imitation cheese.

Plant milk is a pasty or liquid food or food raw material produced by adding water to a raw material including nuts such as almond, hazelnut, cashew nut, sesame, walnut or hemp seed, or cereals such as rice, oats and soybeans, and grinding it. Such plant milk often has a white turbid appearance like milk. As the plant milk, soybean milk and oat milk are preferable.

The plant milk used in the present invention may contain a solid content generated by grinding, or may be obtained by removing the solid content by filtration or the like. Also included are those obtained simply by juice extraction, and commercially available products may be used.

When the above-mentioned plant milk is used, in the present invention, from the viewpoint of obtaining a thicker and rich taste imitation cheese, it is preferable to use a product having a mass ratio of protein to fat (former/latter) of 0.3 to 4.0 in the plant milk to be used, more preferably 0.33 to 3.5, still more preferably 0.35 to 3.0.

In addition, the content of plant milk in the imitation cheese of the present invention is preferably 0.5 to 5% by mass, more preferably 0.5 to 4.2% by mass, still more preferably 0.5 to 3.5% by mass, particularly preferably 0.5 to 2.8% by mass, in the imitation cheese.

### [Method for producing imitation cheese]

A method for producing the imitation cheese of the present invention will be described. As long as the imitation cheese of the present invention contains the components A and B and satisfies the condition 1, the method for producing the imitation cheese is not particularly limited. It is preferable that the imitation cheese of the present invention is produced by a production method that includes the following (Step 1) to (Step 5) to be performed in this order:
(Step 1) a step of mixing a raw material(s) containing the components A and B to obtain a preliminary emulsion;
(Step 2) a step of adjusting a pH of the preliminary emulsion to 3.0 to 5.5;
(Step 3) a step of homogenizing the preliminary emulsion with the pH of 3.0 to 5.5;
(Step 4) a step of heating the homogenized preliminary emulsion with the pH of 3.0 to 5.5 to be at least 100°C or higher; and
(Step 5) a step of cooling the preliminary emulsion that has been heated to at least 100°C or higher to be at least 20°C or lower.

Hereinafter, a preferred method for producing the imitation cheese of the present invention will be described.

### <Step 1>

The step 1 is a step of preparing a mixture liquid containing the above-mentioned components A and B, and preliminarily emulsifying the mixture liquid into an oil-in-water type to obtain a preliminary emulsion. The step 1 may be a step of mixing all raw materials including the components A and B to obtain a preliminary emulsion. The preliminary emulsion is preferably a preliminary emulsified liquid.

Specifically, one or two or more types of fats and oils, preferably the above-mentioned fat and oil α and fat and oil β, are thermally melted and mixed. Then, a whole grain ground product of high-carbohydrate beans and, as necessary, a cross-linked starch and oil-soluble other components are added to the heat-dissolved fats and oils, and stirred and mixed to obtain an oil phase.

Next, an oxidized starch is added to water, and as necessary, an acetylated starch, water-soluble dietary fibers, and other water-soluble components are further added. The mixture is stirred and mixed to obtain an aqueous phase.

The oil phase is added to the aqueous phase, mixed, and preliminarily emulsified to be an oil-in-water form, thereby obtaining a preliminary emulsion.

In the mixing, from the viewpoint of improving the taste of the resultant imitation cheese and enhancing the production efficiency by avoiding the thickening of the preliminary emulsion, the liquid temperature of the preliminary emulsion varies depending on the melting point and the like of the contained fats and oils, but it is preferably 45°C to 75°C.

### <Step 2>

The step 2 is a step of adjusting the pH of the preliminary emulsion to 3.0 to 5.5.

In the production of the imitation cheese of the present invention, the pH of the preliminary emulsion is adjusted to be preferably 3.2 to 5.2, more preferably 3.3 to 4.9, still more preferably 3.4 to 4.7, particularly preferably 3.5 to 4.5, from the viewpoint of obtaining the cheese-like taste of the imitation cheese more preferably and improving the emulsion stability.

The method for adjusting the pH of the preliminary emulsion to be within the above-mentioned range preferably involves using an organic acid or a food material containing an organic acid or performing organic acid fermentation from the viewpoint of improving the taste of the imitation cheese of the present invention. In order to facilitate the pH adjustment, it is preferable to add an organic acid or a food material containing an organic acid to the preliminary emulsion. The organic acid or the food material containing an organic acid that can be used is as described above.

### <Step 3>

The step 3 is a step of homogenizing the preliminary emulsion that has been subjected to the pH adjustment.

The step of homogenization in the method for producing the imitation cheese of the present invention is a step of homogenizing the preliminary emulsion thus obtained as described above with a homogenizer such as a valve homogenizer, a homomixer, or a colloidal mill to obtain an oil-in-water emulsion composition. The homogenization pressure is not particularly limited, and is preferably 0 to 200 MPa. When homogenization is performed using a two-stage homogenizer, for example, the first stage is preferably performed at 1 to 150 MPa and the second stage is preferably performed at 3 to 200 MPa.

### <Step 4>

The step 4 is a step of heating the homogenized, pH-adjusted preliminary emulsion to a temperature of at least 100°C or higher.

When the preliminary emulsion obtained as described above is heated to 100°C or higher, a cheese-like texture of the resultant imitation cheese is more preferably obtained.

The heating can be performed by heating treatment by UHT, HTST, batch-type, retort, microwave heating and the like using direct heating methods such as injection type and infusion type or using indirect heating methods such as plate type, tubular type, and scraping type, or by heat cooking using direct fire or the like.

The heating temperature is preferably at least 100°C or higher, preferably 100 to 140°C, more preferably 105 to 140°C, still more preferably 110 to 140°C, particularly preferably 115 to 140°C. The heating time is preferably 1 second to 15 minutes.

### <Step 5>

The step 5 is a step of cooling the preliminary emulsion that has been heated to at least 100°C or higher to at least 20°C or lower.

By cooling the heated preliminary emulsion to at least 20°C or lower, an imitation cheese having a favorable elasticity and a cheese-like texture when eaten as it is without heating can be easily obtained.

The cooling may be rapid cooling or slow cooling, but from the viewpoint of obtaining a cheese-like texture more preferably, slow cooling is preferably performed.

In the present invention, rapid cooling refers to cooling at a cooling rate of 1.0°C/min or more, and slow cooling refers to cooling at a cooling rate of less than 1.0°C/min. In the present invention, it is preferable to cool to 20°C or lower, more preferably to 15°C or lower, and still more preferably to 10°C or lower. The lower limit is 3°C.

The imitation cheese of the present invention obtained in the manner described above can be optionally shaped into a block, bar, cylinder, dice, shred, sheet, or spherical shape. Preferred sizes for each shape are: block shape with longitudinal dimension of 50 to 1000 mm, lateral dimension of 50 to 1000 mm, and thickness of 50 to 500 mm; bar shape with longitudinal dimension of 1 to 25 mm, lateral dimension of 1 to 25 mm, and length of 5 to 100 mm; cylindrical shape with diameter of 1 to 25 mm and length of 5 to 100 mm; dice shape with longitudinal dimension of 5 to 50 mm, lateral dimension of 5 to 50 mm, and thickness of 5 to 50 mm; shred shape with diameter of 1 to 25 mm and length of 5 to 100 mm; sheet shape with longitudinal dimension of 50 to 1000 mm, lateral dimension of 50 to 1000 mm, and thickness of 1 to 50 mm; and spherical shape with diameter of 10 to 500 mm.

In addition, the imitation cheese of the present invention may be packed or packaged in a container, a bag, or the like with an optional shape.

### [Characteristics and application of imitation cheese]

The imitation cheese of the present invention can achieve and maintain cheese-like hardness and viscosity so that the structure thereof does not collapse or the separation into oil and water does not occur even at an acidic pH region. Therefore, the imitation cheese can achieve both a cheese-like texture and a cheese-like taste.

Accordingly, the imitation cheese of the present invention can be used preferably as a substitute of semi-hard cheese, hard cheese, or ultra-hard cheese, more preferably as a substitute of semi-hard cheese or hard cheese, still more preferably as a substitute of semi-hard cheese.

Generally, examples of semi-hard cheese include Gorgonzola cheese, Roquefort cheese, and Gouda cheese. Examples of hard cheese include Emmental cheese, Cheddar cheese, and Edam cheese. Examples of ultra-hard cheese include Parmigiano Reggiano cheese and Romano cheese.

According to a preferable aspect of the present invention, the imitation cheese of the present invention can be eaten as it is, and a food product or a combined food product in which the imitation cheese of the present invention is combined with other food materials can be eaten.

Examples of the food product or combined food product in which the imitation cheese is combined with other food materials include food products using shredded cheese, block cheese, cheese sauce, and powdered cheese. A food product using the imitation cheese as topping or filling over a heat-cooked food product is suitable.

Specific examples of such a food product include toast, pizza, gratin, rice and cheese casserole, lasagna, hamburg, and risotto. According to a preferred aspect of the present invention, the imitation cheese of the present invention reproduces cheese-like texture and physical properties during heating and melting, and therefore the imitation cheese can be used as a substitute of cheese for heat-cooking.

According to a preferred aspect of the present invention, the imitation cheese of the present invention has excellent processing suitability. For example, even when the resultant imitation cheese is processed into dices, shreds, or the like, the generation of chips and collapse during processing are prevented. Furthermore, diced or shredded imitation cheeses are unlikely to be attached to each other.

### Examples

Hereinafter, the present invention will be described in detail with reference to Examples. However, the present invention is not limited to the following examples.

### [Blended fat and oil]

### [Production example of interesterified fat and oil to be used]

### [Production of interesterified fat and oil A]

A fat and oil blend including 50% by mass of a palm kernel oil and 50% by mass of a fully hydrogenated palm oil containing 44.6% by mass of P and 53.6% by mass of St in the fatty acid residues was subjected to a random interesterification reaction using sodium methoxide as a catalyst, and refined by a conventional method to obtain an interesterified fat and oil A.

The interesterified fat and oil A contained 26.9% by mass of P, 26.4% by mass of St, and 24.2% by mass of La in the fatty acid residues, the value of [La/(St+P)] was 0.45, and LaLaLa in the triglyceride composition was 1.2% by mass.

### [Production of interesterified fat and oil B]

A fat and oil blend including 75% by mass of a palm kernel oil and 25% by mass of a fully hydrogenated palm oil was subjected to a random interesterification reaction using sodium methoxide as a catalyst, and refined by a conventional method to obtain an interesterified fat and oil B.

The interesterified fat and oil B contained 18.3% by mass of P, 14.4% by mass of St, and 34.1% by mass of La in the fatty acid residues, the value of [La/(St+P)] was 1.04, and LaLaLa in the triglyceride composition was 4.4% by mass.

### [Production of interesterified fat and oil C]

One hundred% by mass of a palm fractionated soft part oil was subjected to a random interesterification reaction using sodium methoxide as a catalyst, and refined by a conventional method to obtain an interesterified fat and oil C.

The interesterified fat and oil C contained 40.5% by mass of P, 4.2% by mass of St, and 0.7% by mass of La in the fatty acid residues, the value of [La/(St+P)] was 0.015, and LaLaLa in the triglyceride composition was 0% by mass.

### [Production of interesterified fat and oil D]

A fat and oil blend including 65% by mass of a palm oil and 35% by mass of a fully hydrogenated palm oil was subjected to a random interesterification reaction using sodium methoxide as a catalyst, and refined by a conventional method to obtain an interesterified fat and oil D.

The interesterified fat and oil D contained 44.4% by mass of P, 19.3% by mass of St, and 0.6% by mass of La in the fatty acid residues, the value of [La/(St+P)] was 0.009, and LaLaLa in the triglyceride composition was 0% by mass.

### [Non-interesterified fat and oil to be used]

Coconut Oil: The oil contained 8.3% by mass of P, 2.7% by mass of St, and 50.3% by mass of La, the value of [La/(St+P)] was 4.56, LaLaLa in the triglyceride composition was 21.7% by mass, and the iodine value was 8.0.

Soybean oil: The oil contained 10.3% by mass of P, 3.9% by mass of St, and 0% by mass of La, and LaLaLa in the triglyceride composition was 0% by mass.

The above-described interesterified fats and oils A to D, coconut oil, and soybean oil were used to prepare mixed fats and oils A to E according to Table 1. The prepared mixed fats and oils A to E were used in the following Study 1 to 5 to produce imitation cheeses.

### [Table 1]

**(Table 1)**

| Formulation of mixed fats and oils | A | B | C | D | E |
|---|---|---|---|---|---|
| Coconut oil | 40 | 30 | 25 | 40 | |
| Soybean oil | | | | | 20 |
| Interesterified fat and oil A | 39 | 35 | 50 | 20 | |
| Interesterified fat and oil B | 21 | 35 | 25 | 40 | |
| Interesterified fat and oil C | | | | | 76 |
| Interesterified fat and oil D | | | | | 4 |

| Details of each mixed fats and oils | | | | | |
|---|---|---|---|---|---|
| Content of fat and oil α (% by mass) | 60.0 | 70.0 | 75.0 | 60.0 | 0.0 |
| Content of fat and oil β (% by mass) | 40.0 | 30.0 | 25.0 | 40.0 | 0.0 |
| Content of other fat and oil (% by mass) | 0.0 | 0.0 | 0.0 | 0.0 | 100.0 |
| SFC-25 (%) | 36.8 | 39.3 | 46.0 | 30.8 | 16.7 |
| SFC-35 (%) | 12.9 | 11.9 | 16.5 | 7.3 | 6.9 |
| SFC-25/SFC-35 | 2.9 | 3.3 | 2.8 | 4.2 | 2.4 |
| Content of saturated fatty acid residues in fatty acid residue composition (% by mass) | 89.5 | 88.4 | 88.7 | 88.5 | 41.3 |
| Content of lauric acid residue in saturated fatty acid residues in fatty acid residue composition (% by mass) | 41.1 | 40.2 | 37.4 | 43.7 | 1.3 |

### <Study 1>

Beans used in the production of imitation cheeses were studied.

### <<Study 1-1: Types of beans>>

Imitation cheeses of Examples 1-1 to 1-3 and Comparative Examples 1-1 to 1-3 were produced in accordance with the formulation in Table 2 by the following procedure.

### (Production procedure)

To the mixed fat and oil A, any one of a whole grain ground product A of high-carbohydrate beans (chickpeas), a whole grain ground product of high-carbohydrate beans (lentils), a whole grain ground product of low-carbohydrate beans (soybeans), a powdered soybean protein or a powdered chickpea protein, hydroxypropyl distarch phosphate, and pectin were added, and stirred and mixed to obtain an oil phase.

To water, an oxidized starch α, common salt, potassium chloride, sodium glutamate, water-soluble dietary fibers A, soybean milk, and sugar were added, and stirred and mixed to obtain an aqueous phase. The mass ratio of protein to fat (protein/fat) in soybean milk was 1.56 (= 8.6/5.5). The mass proportions of the oil phase and the aqueous phase are the oil content (% by mass) and the water content (% by mass), respectively, shown in Table 2.

To the aqueous phase, the oil phase was added and mixed, to obtain an oil-in-water preliminary emulsion (preliminary emulsified liquid). To the obtained preliminary emulsion, lactic acid (fermented lactic acid containing 50% of lactic acid) was added to adjust its pH to pH shown in Table 2, and the mixture was homogenized under a homogenization pressure of 3 MPa, to obtain an oil-in-water emulsion composition.

The obtained oil-in-water emulsion composition was heated at 120°C for 3 seconds and then slowly cooled to 4°C with a direct heating UHT sterilizer, to obtain the imitation cheeses of Examples 1-1 to 1-3 and Comparative Examples 1-1 to 1-3.

### [Table 2]

**(Table 2)**

| (% by mass) | Example 1-1 | Example 1-2 | Example 1-3 | | | |
|---|---|---|---|---|---|---|
| | | | | Comparative Example 1-1 | Comparative Example 1-2 | Comparative Example 1-3 |
| Mixed fat and oil A | 25 | 25 | 25 | 25 | 25 | 25 |
| Whole grain ground product A of high-carbohydrate beans (Chickpeas) (*1) | 4 | 4 | | | | |
| Whole grain ground product of high-carbohydrate beans (Lentils) (*2) | | | 4 | | | |
| Whole grain ground product of low-carbohydrate beans(Soybeans) (*3) | | | | 4 | | |
| Powdered soybean protein (*4) | | | | | 4 | |
| Powdered chickpea protein (*5) | | | | | | 4 |
| Common salt | 2 | 2 | 2 | 2 | 2 | 2 |
| Potassium Chloride | 0.23 | 0.23 | 0.23 | 0.23 | 0.23 | 0.23 |
| Sodium glutamate | 0.3 | 0.3 | 0.3 | 0.3 | 0.3 | 0.3 |
| Water-soluble dietary fibers (*6) | 0.3 | 0.3 | 0.3 | 0.3 | 0.3 | 0.3 |
| Pectin | 0.3 | 0.3 | 0.3 | 0.3 | 0.3 | 0.3 |
| 50% fermented lactic acid | 0.76 | 0.3 | 0.76 | 0.76 | 0.76 | 0.76 |
| Hydroxypropyl distarch phosphate (*7) | 3 | 3 | 3 | 3 | 3 | 3 |
| Oxidized starch α (*8) | 14 | 14 | 14 | 14 | 14 | 14 |
| Sugar | 3 | 3 | 3 | 3 | 3 | 3 |
| Soybean milk | 2 | 2 | 2 | 2 | 2 | 2 |
| Water | 45.11 | 45.57 | 45.11 | 45.11 | 45.11 | 45.11 |

| Details of each formulation | | | | | | |
|---|---|---|---|---|---|---|
| Oil content (% by mass) | 25.4 | 25.4 | 25.3 | 25.7 | 25.2 | 26.0 |
| Water content (% by mass) | 50.1 | 50.3 | 50.4 | 50.2 | 50.1 | 50.2 |
| pH | 3.8 | 4.4 | 3.8 | 3.8 | 3.8 | 3.8 |
| Protein content in imitation cheese (% by mass) | 1.0 | 1.0 | 1.1 | 1.9 | 3.6 | 2.7 |

| | | | | | | |
|---|---|---|---|---|---|---|
| (*1) 65% by mass of carbohydrate, 20% by mass of protein, steam-heating was performed (*2) 60.7% by mass of carbohydrate, 23.2% by mass of protein, heating treatment was performed with enzyme inactivation and drying (*3) 33.0% by mass of carbohydrate, 41.6% by mass of protein, roasting was performed (*4) 4% by mass of carbohydrate, 85.8% by mass of protein (*5) 5% by mass of carbohydrate, 63.0% by mass of protein (*6) Agar was used. Agar having a jelly strength in the range of 630 to 800 g/cm² was used. (*7) One produced using, as a raw material starch, a corn-derived starch was used. (*8) One produced using, as a raw material starch, a potato-derived starch was used. | | | | | | |

### [Evaluation]

The imitation cheeses of Examples 1-1 to 1-3 and Comparative Examples 1-1 to 1-3 thus obtained were subjected to the following respective evaluations. The evaluation results are shown in Table 3.

Ten expert panelists performed sensory evaluation (taste evaluation, texture evaluation, and evaluation of texture after heating) of the resultant imitation cheeses in accordance with the following evaluation criteria. Evaluation scores (1 to 5 points) described below by the expert panelists were accumulated as scores. Table 3 is shown by the following expression method.
++: 43 to 50 points
+: 37 to 42 points
±: 31 to 36 points
-: 24 to 30 points
--: 23 points or less

Prior to the evaluation, the panelists fitted the degree of senses corresponding to each of scores. An imitation cheese that obtains evaluation equal to or more than ± in all items is considered to be an acceptable product.

### [Processing suitability evaluation]

The resultant imitation cheeses of Examples 1-1 to 1-3 and Comparative Examples 1-1 to 1-3 were processed into an 8-mm cube using a cheese dicer ("cheesixx" manufactured by holac Maschinenbau GmbH), and processing suitability at this time was evaluated in accordance with the following evaluation criteria.
++: processing was possible, the cut imitation cheese was not attached to a cutting blade, and attachment of the cubes of the imitation cheese after cutting to each other was not seen.
+: processing was possible, the cut imitation cheese was slightly attached to a cutting blade, and partial attachment of the cubes of the imitation cheese after cutting to each other was seen.
±: processing was possible, the cut imitation cheese was slightly attached to a cutting blade, and partial collapse of the cubes was seen.
-: processing was possible, the cut imitation cheese was strongly attached to a cutting blade, and collapse of the cubes was often seen.
--: hardness was insufficient, and processing could not be performed.

### [Emulsion stability evaluation criteria]

The imitation cheeses of Examples 1-1 to 1-3 and Comparative Examples 1-1 to 1-3 that could be shaped into an 8-mm cube were placed in a glass container with a lid, and stored in a constant temperature bath at 25°C for 24 hours. The subsequent state was visually confirmed and evaluated in accordance with the following criteria.
++: Oil was not separated at all, and emulsion stability was excellent.
+: Separation of very slight oil was confirmed, but emulsion stability was good.
±: Fine oil droplets were confirmed, but emulsion stability was allowable.
-: Oil was separated, and a 3D structure partially collapses.
--: Oil separation was significantly caused, and a 3D structure completely collapses.

### [Taste evaluation]

The imitation cheeses of Examples 1-1 to 1-3 and Comparative Examples 1-1 to 1-3 that could be shaped into an 8-mm cube were eaten as it is, and evaluated in accordance with the following criteria.
5 points: No odd taste was felt, and an appropriate sour taste and a rich taste were felt. The taste was excellent.
4 points: No odd taste was felt, and an appropriate sour taste and a slight rich taste were felt. The taste was good.
3 points: An odd taste was slightly felt, but was allowable. An appropriate sour taste was felt.
2 points: An odd taste was felt. The taste was poor.
1 point: An odd taste was strongly felt. The taste was very poor.

### [Texture evaluation criteria]

The imitation cheeses of Examples 1-1 to 1-3 and Comparative Examples 1-1 to 1-3 that could be shaped into an 8-mm cube were eaten as it is, and evaluated in accordance with the following criteria.
5 points: A sticky or powdery texture was not felt, and cheese-like appropriate hardness and viscosity were felt. The texture was excellent.
4 points: A sticky or powdery texture was slightly felt, but cheese-like hardness and viscosity were felt. The texture was good.
3 points: A sticky or powdery texture was felt, but a cheese-like texture was felt. The texture was allowable.
2 points: There was any one of the following (A) to (C) :
   (A) The texture was hard and fragile, and a cheese-like texture was not achieved.
   (B) The texture was powdery, cheese-like viscosity was low, and stickiness was high. Cheese-like hardness was not felt.
   (C) Stickiness was high. Cheese-like hardness was not felt.
1 point: There were any two or more of the following (A) to (C):
   (A) The texture was hard and fragile, and a cheese-like texture was not achieved.
   (B) The texture was powdery, cheese-like viscosity was low, and stickiness was high. Cheese-like hardness was not felt.
   (C) Stickiness was high. Cheese-like hardness was not felt.

### [Evaluation criteria of texture after heating]

The imitation cheeses of Examples 1-1 to 1-3 and Comparative Examples 1-1 to 1-3 that could be shaped into an 8-mm cube were placed on a cracker ("Levain classical" manufactured by YAMAZAKI-BISCUITS Co., Ltd.), heated under a heating condition of 2 minutes using an oven toaster (manufactured by Koizumi Seiki Corporation, heater: upper and lower quartz tube heater, power consumption: 1,000 W), eaten, and evaluated in accordance with the following criteria.
5 points: A sticky texture was not felt, and cheese-like appropriate viscosity was felt. The texture was excellent.
4 points: A sticky texture was slightly felt, but cheese-like viscosity was felt. The texture was good.
3 points: A sticky texture was felt, but a cheese-like texture was felt. The texture was allowable.
2 points: There was any one of the following (A) or (B) :
   (A) The texture was hard, and a cheese-like texture was not achieved.
   (B) Stickiness was high. Cheese-like viscosity was not felt.
1 point: There were the following (A) and (B):
   (A) The texture was hard, and a cheese-like texture was not achieved.
   (B) Stickiness was high. Cheese-like viscosity was not felt.

### [Table 3]

**(Table 3)**

| | Example 1-1 | Example 1-2 | Example 1-3 | | | |
|---|---|---|---|---|---|---|
| | | | | Comparative Example 1-1 | Comparative Example 1-2 | Comparative Example 1-3 |
| Processing suitability evaluation | + + | + + | + | + | + | ± |
| Emulsion stability evaluation | + + | + + | + + | ± | ± | - |
| Taste evaluation | + + | + | ++ | - | - | - |
| Texture evaluation | + + | + + | + + | ± | - | - |
| Evaluation of texture after heating | + + | + + | + | ± | - | - |

From Study 1-1, the following findings were obtained.

As seen from Examples 1-1 to 1-3, due to the configuration of the present invention, the imitation cheeses are stable in the emulsified state at an acidic pH region and have excellent processing suitability without collapse of a structure. As seen from Examples 1-1 and 1-3 and Comparative Example 1-1, the amount of carbohydrate contained in used beans particularly contributes to the taste and texture of the imitation cheeses. Furthermore, from Example 1-1 and Comparative Examples 1-2 and 1-3, it was found that regardless of the types of used beans, use of a specific extracted component (protein component) alone in the production of imitation cheese does not favorably affect a taste and a texture.

### <<Study 1-2: Whether beans are processed>>

Imitation cheeses of Examples 1-4 and 1-5 were produced in the same manner as in the production of imitation cheese in Study 1-1 except that whole grain ground products B and C of high-carbohydrate beans shown in Table 4, respectively, were used instead of the whole grain ground product A of the high-carbohydrate beans.

The resultant imitation cheeses of Examples 1-4 and 1-5 were evaluated by the same evaluation methods in accordance with the same evaluation criteria as those in Study 1-1. The results are shown in Table 6.

### [Table 4]

**(Table 4)**

| Product Name | Derived from | Heating before making powder | Carbohydrate (% by mass) | Protein (% by mass) | NSI at 55°C |
|---|---|---|---|---|---|
| Whole grain ground product A of high-carbohydrate beans (Chickpeas) | Chickpeas | Wet heating (Steam heating) | 65 | 20 | 65.6 |
| Whole grain ground product B of high-carbohydrate beans (Chickpeas) | Chickpeas | Dry heating (Roasting) | 61.5 | 20 | 51.3 |
| Whole grain ground product C of high-carbohydrate beans (Chickpeas) | Chickpeas | Unheated | 56 | 22 | 83.5 |

### [Table 5]

**(Table 5)**

| (% by mass) | (Reference) Example 1-1 | Example 1-4 | Example 1-5 |
|---|---|---|---|
| | | | |
| Coconut oil | 10 | 10 | 10 |
| Interesterified fat and oil A | 9.75 | 9.75 | 9.75 |
| Interesterified fat and oil B | 5.25 | 5.25 | 5.25 |
| Whole grain ground product A of high-carbohydrate beans (Chickpeas) | 4 | | |
| Whole grain ground product B of high-carbohydrate beans (Chickpeas) | | 4 | |
| Whole grain ground product C of high-carbohydrate beans (Chickpeas) | | | 4 |
| Common salt | 2 | 2 | 2 |
| Potassium Chloride | 0.23 | 0.23 | 0.23 |
| Sodium glutamate | 0.3 | 0.3 | 0.3 |
| Water-soluble dietary fiber A | 0.3 | 0.3 | 0.3 |
| Pectin | 0.3 | 0.3 | 0.3 |
| 50% fermented lactic acid | 0.76 | 0.76 | 0.76 |
| Hydroxypropyl distarch phosphate | 3 | 3 | 3 |
| Oxidized starch a | 14 | 14 | 14 |
| Sugar | 3 | 3 | 3 |
| Soybean milk | 2 | 2 | 2 |
| Water | 45.11 | 45.11 | 45.11 |

| Details of each formulation | | | |
|---|---|---|---|
| Oil content (% by mass) | 25.4 | 25.3 | 25.3 |
| Water content (% by mass) | 50.1 | 50.3 | 50.4 |
| pH | 3.8 | 3.8 | 3.8 |
| Protein content in imitation cheese (% by mass) | 1.0 | 1.0 | 1.1 |

### [Table 6]

**(Table 6)**

| | (Reference) Example 1-1 | Example 1-4 | Example 1-5 |
|---|---|---|---|
| | | | |
| Processing suitability evaluation | + + | + | + |
| Emulsion stability evaluation | + + | ± | + + |
| Taste evaluation | + + | + | ± |
| Texture evaluation | + + | + + | + |
| Evaluation of texture after heating | + + | + + | + |

The results in Study 1-2 suggested that a heating procedure or the presence or absence of heating in the process of producing the used whole grain ground products of the high-carbohydrate beans particularly contributes to emulsion stability evaluation and taste evaluation. Although a reason and mechanism are not clear, the evaluations of the imitation cheese of Example 1-4 using the high-carbohydrate beans that was dry-heated are low. This is considered to be because by dry-heating, the denaturation of contained protein proceeds as compared with the other imitation cheeses. The evaluations of the taste of the imitation cheeses of Examples 1-1 and 1-4 are relatively high. This is considered to be because a smell component in the high-carbohydrate beans is reduced by heating in producing the whole grain ground product of the high-carbohydrate beans.

### <<Study 1-3: Content of whole grain ground product of high-carbohydrate beans>>

Imitation cheeses of Examples 1-6 to 1-8 and Comparative Example 1-4 were produced in the same manner as in the production of imitation cheese in Study 1-1 except that the amount of the whole grain ground product A of the high-carbohydrate beans was changed as shown in Table 7.

The resultant imitation cheeses were evaluated by the same evaluation methods in accordance with the same evaluation criteria as those in Study 1-1. The results are shown in Table 8.

### [Table 7]

**(Table 7)**

| (% by mass) | | Example 1-6 | Example 1-7 | (Reference) Example 1-1 | Example 1-8 |
|---|---|---|---|---|---|
| | Comparative Example 1-4 | | | | |
| Coconut oil | 10 | 10 | 10 | 10 | 10 |
| Interesterified fat and oil A | 9.75 | 9.75 | 9.75 | 9.75 | 9.75 |
| Interesterified fat and oil B | 5.25 | 5.25 | 5.25 | 5.25 | 5.25 |
| Whole grain ground product A of high-carbohydrate beans (Chickpeas) | | 0.8 | 1.6 | 4 | 7 |
| Common salt | 2 | 2 | 2 | 2 | 2 |
| Potassium Chloride | 0.23 | 0.23 | 0.23 | 0.23 | 0.23 |
| Sodium glutamate | 0.3 | 0.3 | 0.3 | 0.3 | 0.3 |
| Water-soluble dietary fiber A | 0.3 | 0.3 | 0.3 | 0.3 | 0.3 |
| Pectin | 0.3 | 0.3 | 0.3 | 0.3 | 0.3 |
| 50% fermented lactic acid | 0.76 | 0.76 | 0.76 | 0.76 | 0.76 |
| Hydroxypropyl distarch phosphate | 3 | 3 | 3 | 3 | 3 |
| Oxidized starch a | 14 | 14 | 14 | 14 | 14 |
| Sugar | 3 | 3 | 3 | 3 | 3 |
| Soybean milk | 2 | 2 | 2 | 2 | 2 |
| Water | 49.11 | 48.31 | 47.51 | 45.11 | 42.11 |

| Details of each formulation | | | | | |
|---|---|---|---|---|---|
| Oil content (% by mass) | 25.1 | 25.1 | 25.2 | 25.4 | 25.6 |
| Water content (% by mass) | 53.9 | 53.1 | 52.4 | 50.1 | 47.2 |
| pH | 3.8 | 3.8 | 3.8 | 3.8 | 3.8 |
| Protein content in imitation cheese (% by mass) | 0.2 | 0.4 | 0.6 | 1.0 | 1.6 |

### [Table 8]

**(Table 8)**

| | | Example 1-6 | Example 1-7 | (Reference) Example 1-1 | Example 1-8 |
|---|---|---|---|---|---|
| | Comparative Example 1-4 | | | | |
| Processing suitability evaluation | - | ± | + | + + | + + |
| Emulsion stability evaluation | - | ± | + | + + | + + |
| Taste evaluation | ± | ± | + | + + | + |
| Texture evaluation | - | + | + | + + | + |
| Evaluation of texture after heating | - | + | + | + + | ± |

As seen from the results of Study 1-3, the addition of the whole grain ground product of the high-carbohydrate beans is necessary for an imitation cheese having a preferable taste and texture, and processing suitability. With an increase in the addition amount of the whole grain ground product to a constant amount, the evaluations tend to be improved. However, when the addition amount exceeds the constant amount, the evaluations may be reduced.

### <Study 2>

A starch that has been subjected to a cross-linking treatment preferably used in the production of the imitation cheese of the present invention was studied. Specifically, imitation cheeses of Examples 2-1 to 2-5 were produced in the same manner as in the production of imitation cheese in Study 1-1 except that corn-derived distarch phosphate or unprocessed corn-derived starch was added instead of hydroxypropyl distarch phosphate, or the amount of hydroxypropyl distarch phosphate was adjusted in accordance with the formulation in Table 9. The resultant imitation cheeses were evaluated by the same evaluation methods in accordance with the same evaluation criteria as those in Study 1-1. The results are shown in Table 10.

### [Table 9]

**(Table 9)**

| (% by mass) | Example 2-1 | Example 2-2 | Example 2-3 | (Reference) Example 1-1 | Example 2-4 | Example 2-5 |
|---|---|---|---|---|---|---|
| | | | | | | |
| Coconut oil | 10 | 10 | 10 | 10 | 10 | 10 |
| Interesterified fat and oil A | 9.75 | 9.75 | 9.75 | 9.75 | 9.75 | 9.75 |
| Interesterified fat and oil B | 5.25 | 5.25 | 5.25 | 5.25 | 5.25 | 5.25 |
| Whole grain ground product A of high-carbohydrate beans (Chickpeas) | 4 | 4 | 4 | 4 | 4 | 4 |
| Common salt | 2 | 2 | 2 | 2 | 2 | 2 |
| Potassium Chloride | 0.23 | 0.23 | 0.23 | 0.23 | 0.23 | 0.23 |
| Sodium glutamate | 0.3 | 0.3 | 0.3 | 0.3 | 0.3 | 0.3 |
| Water-soluble dietary fiber A | 0.3 | 0.3 | 0.3 | 0.3 | 0.3 | 0.3 |
| Pectin | 0.3 | 0.3 | 0.3 | 0.3 | 0.3 | 0.3 |
| 50% fermented lactic acid | 0.76 | 0.76 | 0.76 | 0.76 | 0.76 | 0.76 |
| Hydroxypropyl distarch phosphate | 0.2 | 1.2 | 1.7 | 3 | 5.5 | |
| Distarch phosphate (*1) | | | | | | 3 |
| Starch (*1) | | | | | | |
| Oxidized starch α | 14 | 14 | 14 | 14 | 14 | 14 |
| Sugar | 3 | 3 | 3 | 3 | 3 | 3 |
| Soybean milk | 2 | 2 | 2 | 2 | 2 | 2 |
| Water | 47.91 | 46.91 | 46.41 | 45.11 | 42.61 | 45.11 |
| Details of each formulation | | | | | | |
| Oil content (% by mass) | 25.4 | 25.4 | 25.4 | 25.4 | 25.4 | 25.4 |
| Water content (% by mass) | 52.4 | 51.6 | 51.2 | 50.1 | 47.9 | 50.1 |
| pH | 3.8 | 3.8 | 3.8 | 3.8 | 3.8 | 3.8 |
| Protein content in imitation cheese (% by mass) | 1.0 | 1.0 | 1.0 | 1.0 | 1.0 | 1.0 |

| | | | | | | |
|---|---|---|---|---|---|---|
| (*1) For both starches, a corn-derived starch was used as a raw material starch. | | | | | | |

### [Table 10]

**(Table 10)**

| | Example 2-1 | Example 2-2 | Example 2-3 | (Reference) Example 1-1 | Example 2-4 | Example 2-5 |
|---|---|---|---|---|---|---|
| | | | | | | |
| Processing suitability evaluation | ± | + | + | + + | + + | + |
| Emulsion stability evaluation | ± | + | + | + + | + + | + |
| Taste evaluation | + + | + + | ++ | + + | + + | + + |
| Texture evaluation | + | + | ++ | + + | + | + |
| Evaluation of texture after heating | ± | + | + | + + | + | + |

As seen from the results of Study 2, the use of the cross-linked starch can improve processing suitability and a texture, and the cross-linked starch, particularly hydroxypropyl distarch phosphate is preferably used. With an increase in the addition amount of hydroxypropyl distarch phosphate to a constant amount, the evaluations tend to be improved. However, when the addition amount exceeds the constant amount, the evaluations may reduce.

### <Study 3>

The amount of oxidized starch used in the production of the imitation cheese of the present invention was studied.

Specifically, imitation cheeses of Examples 3-1 to 3-4 and Comparative Example 3-1 were produced in the same manner as in the production of imitation cheese in Study 1-1 in accordance with the formulation in Table 11.

The resultant imitation cheeses were evaluated by the same evaluation methods in accordance with the same evaluation criteria as those in Study 1-1. The results are shown in Table 12.

### [Table 11]

**(Table 11)**

| (% by mass) | Example 3-1 | Example 3-2 | (Reference) Example 1-1 | Example 3-3 | Example 3-4 | |
|---|---|---|---|---|---|---|
| | | | | | | Comparative Example 3-1 |
| Coconut oil | 10 | 10 | 10 | 10 | 10 | 10 |
| Interesterified fat and oil A | 9.75 | 9.75 | 9.75 | 9.75 | 9.75 | 9.75 |
| Interesterified fat and oil B | 5.25 | 5.25 | 5.25 | 5.25 | 5.25 | 5.25 |
| Whole grain ground product A of high-carbohydrate beans (Chickpeas) | 4 | 4 | 4 | 4 | 4 | 4 |
| Common salt | 2 | 2 | 2 | 2 | 2 | 2 |
| Potassium Chloride | 0.23 | 0.23 | 0.23 | 0.23 | 0.23 | 0.23 |
| Sodium glutamate | 0.3 | 0.3 | 0.3 | 0.3 | 0.3 | 0.3 |
| Water-soluble dietary fiber A | 0.3 | 0.3 | 0.3 | 0.3 | 0.3 | 0.3 |
| Pectin | 0.3 | 0.3 | 0.3 | 0.3 | 0.3 | 0.3 |
| 50% fermented lactic acid | 0.76 | 0.76 | 0.76 | 0.76 | 0.76 | 0.76 |
| Hydroxypropyl distarch phosphate | 3 | 3 | 3 | 3 | 3 | 3 |
| Oxidized starch α | 5 | 8 | 14 | 17 | 7 | |
| Starch (*1) | | | | | 7 | 14 |
| Sugar | 3 | 3 | 3 | 3 | 3 | 3 |
| Soybean milk | 2 | 2 | 2 | 2 | 2 | 2 |
| Water | 54.11 | 51.11 | 45.11 | 42.11 | 45.11 | 45.11 |

| Details of each formulation | | | | | | |
|---|---|---|---|---|---|---|
| Oil content (% by mass) | 25.3 | 25.3 | 25.4 | 25.4 | 25.3 | 25.3 |
| Water content (% by mass) | 57.7 | 55.4 | 50.1 | 47.5 | 50.3 | 50.5 |
| pH | 3.8 | 3.8 | 3.8 | 3.8 | 3.8 | 3.8 |
| Protein content in imitation cheese (% by mass) | 1.0 | 1.0 | 1.0 | 1.0 | 1.0 | 1.0 |

| | | | | | | |
|---|---|---|---|---|---|---|
| (*1) Starch produced using, as a raw material starch, a potato-derived starch was used. | | | | | | |

### [Table 12]

**(Table 12)**

| | Example 3-1 | Example 3-2 | (Reference) Example 1-1 | Example 3-3 | Example 3-4 | |
|---|---|---|---|---|---|---|
| | | | | | | Comparative Example 3-1 |
| Processing suitability evaluation | ± | + | + + | + + | + | -- |
| Emulsion stability evaluation | ± | + | + + | + + | + | ± |
| Taste evaluation | + + | + + | + + | + + | + + | + + |
| Texture evaluation | ± | + | + + | ± | ± | -- |
| Evaluation of texture after heating | ± | + | + + | ± | ± | -- |

As seen from the results in Study 3, the use of the oxidized starch can improve processing suitability and a texture. With the oxidized starch, a typical starch that is not cross-linked or oxidized can be used in combination, but a texture and processing suitability when the typical starch is not added are more improved.

### <Study 4>

Water-soluble dietary fibers used in the production of the imitation cheese of the present invention were studied. Specifically, imitation cheeses of Examples 4-1 to 4-6 were produced in the same manner as in the production of imitation cheese in Study 1-1 in accordance with the formulation in Table 13.

The resultant imitation cheeses were evaluated by the same evaluation methods in accordance with the same evaluation criteria as those in Study 1-1. The results are shown in Table 14.

### [Table 13]

**(Table 13)**

| (% by mass) | Example 4-1 | Example 4-2 | (Reference) Example 1-1 | Example 4-3 | Example 4-4 | Example 4-5 | Example 4-6 |
|---|---|---|---|---|---|---|---|
| | | | | | | | |
| Coconut oil | 10 | 10 | 10 | 10 | 10 | 10 | 10 |
| Interesterified fat and oil A | 9.75 | 9.75 | 9.75 | 9.75 | 9.75 | 9.75 | 9.75 |
| Interesterified fat and oil B | 5.25 | 5.25 | 5.25 | 5.25 | 5.25 | 5.25 | 5.25 |
| Whole grain ground product A of high-carbohydrate beans (Chickpeas) | 4 | 4 | 4 | 4 | 4 | 4 | 4 |
| Common salt | 2 | 2 | 2 | 2 | 2 | 2 | 2 |
| Potassium Chloride | 0.23 | 0.23 | 0.23 | 0.23 | 0.23 | 0.23 | 0.23 |
| Sodium glutamate | 0.3 | 0.3 | 0.3 | 0.3 | 0.3 | 0.3 | 0.3 |
| Water-soluble dietary fiber A | | 0.15 | 0.3 | 1.2 | | | |
| Water-soluble dietary fiber B (*1) | | | | | 0.3 | | |
| Water-soluble dietary fiber C (*2) | | | | | | 0.3 | |
| Water-soluble dietary fiber D (*3) | | | | | | | 2 |
| Pectin | 0.3 | 0.3 | 0.3 | 0.3 | 0.3 | 0.3 | 0.3 |
| 50% fermented lactic acid | 0.76 | 0.76 | 0.76 | 0.76 | 0.76 | 0.76 | 0.76 |
| Hydroxypropyl distarch phosphate | 3 | 3 | 3 | 3 | 3 | 3 | 3 |
| Oxidized starch α | 14 | 14 | 14 | 14 | 14 | 14 | 14 |
| Sugar | 3 | 3 | 3 | 3 | 3 | 3 | 3 |
| Soybean milk | 2 | 2 | 2 | 2 | 2 | 2 | 2 |
| Water | 45.41 | 45.26 | 45.11 | 44.21 | 45.11 | 45.11 | 43.41 |

| Details of each formulation | | | | | | | |
|---|---|---|---|---|---|---|---|
| Oil content (% by mass) | 25.4 | 25.4 | 25.4 | 25.4 | 25.4 | 25.4 | 25.4 |
| Water content (% by mass) | 50.3 | 50.4 | 50.1 | 50.6 | 51.1 | 51.1 | 48.6 |
| pH | 3.8 | 3.8 | 3.8 | 3.8 | 3.8 | 3.8 | 3.8 |
| Protein content in imitation cheese (% by mass) | 1.0 | 1.0 | 1.0 | 1.0 | 1.0 | 1.0 | 1.0 |

| | | | | | | | |
|---|---|---|---|---|---|---|---|
| (*1) Agar was used. Agar having a jelly strength of less than 600 g/cm² was used. (*2) Agar was used. Agar having a jelly strength of 1,700 to 2,000 g/cm² was used. (*3) Inulin was used. | | | | | | | |

### [Table 14]

**(Table 14)**

| | Example 4-1 | Example 4-2 | (Reference) Example 1-1 | Example 4-3 | Example 4-4 | Example 4-5 | Example 4-6 |
|---|---|---|---|---|---|---|---|
| | | | | | | | |
| Processing suitability evaluation | ± | + | ++ | + + | ± | + + | ± |
| Emulsion stability evaluation | ± | + | ++ | + + | + | + + | + |
| Taste evaluation | ++ | + + | ++ | + + | ++ | + + | + + |
| Texture evaluation | ± | ± | ++ | + | ± | + | + |
| Evaluation of texture after heating | ± | ± | + + | ± | ± | ± | ± |

As seen from the results in Study 4, the use of the water-soluble dietary fibers, particularly agar can improve processing suitability and a texture. Furthermore, the use of agar having constant jelly strength improves particularly processing suitability and a texture.

### <Study 5>

A fat and oil used in the production of the imitation cheese of the present invention was studied. Specifically, imitation cheeses of Examples 5-1 to 5-6 were produced in the same manner as in the production of imitation cheese in Study 1-1 in accordance with the formulation in Table 15.

The resultant imitation cheeses were evaluated by the same evaluation methods in accordance with the same evaluation criteria as those in Study 1-1. The results are shown in Table 16.

### [Table 15]

**(Table 15)**

| (% by mass) | Example 5-1 | (Reference) Example 1-1 | Example 5-2 | Example 5-3 | Example 5-4 | Example 5-5 | Example 5-6 |
|---|---|---|---|---|---|---|---|
| | | | | | | | |
| Mixed fats and oils A | 15 | 25 | 35 | | | | |
| Mixed fats and oils B | | | | 25 | | | |
| Mixed fats and oils C | | | | | 25 | | |
| Mixed fats and oils D | | | | | | 25 | |
| Mixed fats and oils E | | | | | | | 25 |
| Whole grain ground product A of high-carbohydrate beans (Chickpeas) | 4 | 4 | 4 | 4 | 4 | 4 | 4 |
| Common salt | 2 | 2 | 2 | 2 | 2 | 2 | 2 |
| Potassium Chloride | 0.23 | 0.23 | 0.23 | 0.23 | 0.23 | 0.23 | 0.23 |
| Sodium glutamate | 0.3 | 0.3 | 0.3 | 0.3 | 0.3 | 0.3 | 0.3 |
| Water-soluble dietary fiber A | 0.3 | 0.3 | 0.3 | 0.3 | 0.3 | 0.3 | 0.3 |
| Pectin | 0.3 | 0.3 | 0.3 | 0.3 | 0.3 | 0.3 | 0.3 |
| 50% fermented lactic acid | 0.76 | 0.76 | 0.76 | 0.76 | 0.76 | 0.76 | 0.76 |
| Hydroxypropyl distarch phosphate | 3 | 3 | 3 | 3 | 3 | 3 | 3 |
| Oxidized starch α | 14 | 14 | 14 | 14 | 14 | 14 | 14 |
| Sugar | 3 | 3 | 3 | 3 | 3 | 3 | 3 |
| Soybean milk | 2 | 2 | 2 | 2 | 2 | 2 | 2 |
| Water | 55.11 | 45.11 | 35.11 | 45.11 | 45.11 | 45.11 | 45.11 |

| Details of each formulation | | | | | | | |
|---|---|---|---|---|---|---|---|
| Oil content (% by mass) | 15.4 | 25.4 | 35.4 | 25.4 | 25.4 | 25.4 | 25.4 |
| Water content (% by mass) | 60.1 | 50.1 | 40.1 | 50.1 | 50.1 | 50.1 | 50.1 |
| pH | 3.8 | 3.8 | 3.8 | 3.8 | 3.8 | 3.8 | 3.8 |
| Protein content in imitation cheese (% by mass) | 1.0 | 1.0 | 1.0 | 1.0 | 1.0 | 1.0 | 1.0 |

### [Table 16]

**(Table 16)**

| | Example 5-1 | (Reference) Example 1-1 | Example 5-2 | Example 5-3 | Example 5-4 | Example 5-5 | Example 5-6 |
|---|---|---|---|---|---|---|---|
| | | | | | | | |
| Processing suitability evaluation | + | + + | + | + + | + + | + + | ± |
| Emulsion stability evaluation | + + | + + | ± | + + | + + | + + | + |
| Taste evaluation | + | + + | + + | + + | + | + + | + + |
| Texture evaluation | + | + + | + | + + | ± | + | ± |
| Evaluation of texture after heating | ± | + + | ± | + + | ± | ± | ± |

As seen from the results in Study 5, the processing suitability, taste, and texture of the resultant imitation cheeses vary depending on the used fat and oil. In Example 5-4 using the mixed fat and oil C, the taste evaluation is lower than those of the other imitation cheeses. This is considered to be because the imitation cheese has slightly low melt-in-the-mouth feeling due to higher SFC at 25°C corresponding to a general eating temperature band than those of the other imitation cheeses, and taste expression is reduced. In Example 5-6 using the mixed fat and oil E, processing suitability and a texture are lower than those of the other imitation cheeses. This is considered to be because SFC at 25°C and 35°C are lower than those of the other imitation cheeses and the amount of saturated fatty acid residue is small. In comparison with Examples 5-1, 1-1, and 5-2, a preferable fat and oil content was found from the viewpoint of processing suitability, a texture, and the like.

### <Study 6>

The types of sugars and starch and a combination thereof used in the production of the imitation cheese of the present invention were studied. Specifically, imitation cheeses of Examples 6-1 to 6-7 and Comparative Examples 6-1 and 6-2 were produced in the same manner as in the production of imitation cheese in Study 1-1 in accordance with the formulation in Table 17.

The resultant imitation cheeses were evaluated by the same evaluation methods in accordance with the same evaluation criteria as those in Study 1-1, and heat meltability was evaluated in accordance with the following evaluation criteria.

### [Heat meltability]

The produced imitation cheese was cut into a strip shape (8 mm in width, 30 mm in length, 2 mm in thickness) using a cheese dicer ("cheesixx" manufactured by holac Maschinenbau GmbH). Subsequently, 10 g of the imitation cheese cut into a strip shape was weighed and heated on aluminum foil under a heating condition of 2 minutes using an oven toaster (manufactured by Koizumi Seiki Corporation, heater: upper and lower quartz tube heater, power consumption: 1,000 W).

The degree of melting of the heated imitation cheese was visually confirmed, and evaluated in accordance with the following evaluation criteria.
++: The imitation cheese was melted without maintaining its original form, and had appropriate flowability.
+: The imitation cheese was melted so that the original form was partially recognized, and had flowability.
±: The imitation cheese was melted so that the original form was overall recognized, and had slight flowability.
-: After heating for 2 minutes, the original form of the imitation cheese was maintained, and flowability was not recognized. After heating for additional 2 minutes (in total 4 minutes), melting and flowability were recognized. The appearance was changed.
- . Even after heating for 4 minutes, the original form of the imitation cheese was maintained, and flowability was not recognized.

### [Table 17]

**(Table 17)**

| ( 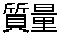 %) | (Reference) Example 1-1 | Example 6-1 | Example 6-2 | | | Example 6-3 | Example 6-4 | Example 6-5 | Example 6-6 | Example 6-7 |
|---|---|---|---|---|---|---|---|---|---|---|
| | | | | Comparative Example 6-1 | Comparative Example 6-2 | | | | | |
| Coconut oil | 10 | 10 | 10 | 10 | 10 | 10 | 10 | 10 | 9 | 10 |
| Interesterified fat and oil A | 9.75 | 9.75 | 9.75 | 9.75 | 9.75 | 9.75 | 9.75 | 9.75 | 8.8 | 9.75 |
| Interesterified fat and oil B | 5.25 | 5.25 | 5.25 | 5.25 | 5.25 | 5.25 | 5.25 | 5.25 | 4.7 | 5.25 |
| Whole grain ground product A of high-carbohydrate beans (Chickpeas) | 4 | 4 | 4 | 4 | 4 | 4 | 4 | 4 | 3 | 3 |
| Common salt | 2 | 2 | 2 | 2 | 2 | 2 | 2 | 2 | 2 | 2 |
| Potassium Chloride | 0.23 | 0.23 | | | | | | | | |
| Sodium glutamate | 0.3 | 0.3 | 0.3 | 0.3 | 0.3 | 0.3 | 0.3 | 0.3 | 0.3 | 0.3 |
| Water-soluble dietary fiber A | 0.3 | 0.3 | 0.3 | 0.3 | 0.3 | 0.3 | 0.3 | 0.3 | 0.3 | 0.3 |
| Pectin | 0.3 | 0.3 | 0.3 | 0.3 | 0.3 | 0.3 | 0.3 | 0.3 | 0.3 | 0.3 |
| 50% fermented lactic acid | 0.76 | 0.76 | 0.48 | 0.48 | 0.48 | 0.48 | 0.48 | 0.42 | 0.42 | 0.53 |
| Hydroxypropyl distarch phosphate | 3 | 3 | | | | | | | | |
| Oxidized starch α | 14 | 14 | 14 | | | 22.5 | | 18 | 18 | 18.5 |
| Oxidized starch β (*1) | | | | | | | 22.5 | 4.5 | 2.5 | |
| Acetylated starch (*2) | | | 6 | 20 | 22.5 | | | | | 1.5 |
| Sugar | 3 | | | | | | | | | |
| Trehalose | | 3 | 3 | 3 | 3 | 3 | 3 | 3 | 3 | 3 |
| Soybean milk | 2 | 2 | | | | | | | | 2 |
| Water | 45.11 | 45.11 | 44.62 | 44.62 | 42.12 | 42.12 | 42.12 | 42.18 | 47.68 | 43.57 |

| Details of each formulation | | | | | | | | | | |
|---|---|---|---|---|---|---|---|---|---|---|
| Oil content (% by mass) | 25.4 | 25.4 | 25.3 | 25.3 | 25.3 | 25.3 | 25.3 | 25.3 | 22.8 | 25.3 |
| Water content (% by mass) | 50.1 | 50.1 | 48.7 | 49.1 | 47.0 | 46.4 | 46.4 | 46.4 | 51.5 | 48.8 |
| pH | 3.8 | 3.8 | 4.1 | 4.1 | 4.1 | 4.1 | 4.1 | 4.1 | 4.1 | 4.1 |
| Protein content in imitation cheese (% by mass) | 1.0 | 1.0 | 0.9 | 1.0 | 1.0 | 0.9 | 0.9 | 0.9 | 0.7 | 1.0 |

| | | | | | | | | | | |
|---|---|---|---|---|---|---|---|---|---|---|
| (*1) One produced using, as a raw material starch, a tapioca-derived starch was used. (*2) One produced by acid-treating and acetylating a potato-derived starch as a raw material starch was used. | | | | | | | | | | |

### [Table 18]

**(Table 18)**

| | (Reference) Example 1-1 | Example 6-1 | Example 6-2 | | | Example 6-3 | Example 6-4 | Example 6-5 | Example 6-6 | Example 6-7 |
|---|---|---|---|---|---|---|---|---|---|---|
| | | | | Comparative Example 6-1 | Comparative Example 6-2 | | | | | |
| Processing suitability evaluation | + + | + + | + + | + | + + | + + | ± | + + | + | + + |
| Emulsion stability evaluation | + + | + + | + + | ++ | + + | + + | + + | + + | + | ++ |
| Taste evaluation | + + | + + | + + | + + | + + | + + | + + | + + | + + | + + |
| Texture evaluation | + + | + + | + + | + | ± | + | ± | + + | + | ++ |
| Evaluation of texture after heating | + + | + + | + | ± | ± | + | + + | + + | + + | + + |
| Heat meltability | + | + | ± | - | - | ± | + + | + + | + + | + |

From the results in Study 6, the following finding were obtained. A change of the contained sugar from sugar to trehalose did not largely affect the texture and physical properties of the resultant imitation cheeses, but improved emulsion stability. This is considered to be because trehalose has higher water-holding capacity than sugar and an aqueous phase in emulsion is stabilized. A imitation cheese produced using an acetylated starch (especially acid-treated acetylated starch) alone without adding an oxidized starch had relatively favorable processing suitability during cutting, but especially a deterioration in texture before and after heating was confirmed.

Further, it was confirmed that the properties of an imitation cheese produced using an oxidized starch alone vary depending on the type of a raw material starch. Specifically, an imitation cheese produced using as a starch an oxidized starch α alone that was produced from a potato-derived raw material starch had favorable processing suitability, but heat meltability was not sufficiently improved as compared with the imitation cheese of Example 1-1. Specifically, an imitation cheese produced using as a starch an oxidized starch β alone that was produced from a tapioca-derived raw material starch had improved heat meltability, but favorable processing suitability was not maintained, as compared with the imitation cheese of Example 1-1.

On the other hand, when an oxidized starch α and an oxidized starch β having different amylose contents were used in combination, an imitation cheese having favorable processing suitability, taste, and heat meltability was obtained. When an oxidized starch and an acetylated starch were used in combination, a favorable imitation cheese was similarly obtained.

Although this reason is not clear, the influence of using a combination of a plurality of starches or processed starches in which conditions about gelatinization and/or aging are different is considered.

## Claims

1. An imitation cheese comprising an oil-in-water emulsion containing the following components A and B, the imitation cheese satisfying the following condition 1:
(Component A) a whole grain ground product of high-carbohydrate beans (provided that the high-carbohydrate beans refer to beans containing 50 to 80% by mass of carbohydrate);
(Component B) an oxidized starch (excluding an oxidized starch that has been subjected to a cross-linking treatment); and
(Condition 1) a pH thereof is 3.0 to 5.5.

2. The imitation cheese according to claim 1, wherein the component A is a whole grain ground product of high-carbohydrate beans that have been subjected to one or more selected from the group consisting of dry heat treatment and wet heat treatment.

3. The imitation cheese according to claim 1 or 2, wherein the whole grain ground product of high-carbohydrate beans of the component A is a whole grain ground product of high-carbohydrate beans having NSI (nitrogen solubility index) at 55°C of 40 to 75.

4. The imitation cheese according to claim 1, wherein the oxidized starch of the component B is one or more selected from the group consisting of the following oxidized starch B-1 and oxidized starch B-2:
<Oxidized starch B-1> an oxidized starch obtained using a raw material starch in which an amylopectin content is 75 to 80% by mass and an amylose content is 20 to 25% by mass; and
<Oxidized starch B-2> an oxidized starch obtained using a raw material starch in which an amylopectin content is 81 to 85% by mass and an amylose content is 15 to 19% by mass.

5. The imitation cheese according to claim 1, comprising one or more of the following components C and D:
(Component C) a starch that has been subjected to a cross-linking treatment; and
(Component D) an acetylated starch.

6. The imitation cheese according to claim 5, comprising, as the component C, a starch that has been subjected to one or more treatments selected from the group consisting of acetylation, hydroxypropylation and phosphoric acid monoesterification in addition to the cross-linking treatment.

7. The imitation cheese according to claim 5 or 6, wherein a content of the component B is 2.2 to 12 parts by mass relative to 1 part by mass of the component C.

8. The imitation cheese according to any one of claims 1, 4 and 5, wherein a ratio of SFC at 25°C (Solid Fat Contents, SFC-25) to SFC at 35°C (SFC-35), SFC-25/SFC-35, of the contained fats and oils is 2.0 to 5.0.

9. The imitation cheese according to any one of claims 1, 4 and 5, comprising the following component E:
(Component E) a water-soluble dietary fiber.

10. A method for producing the imitation cheese according to any one of claims 1, 4 and 5, comprising the following (Step 1) to (Step 5) to be performed in this order:
(Step 1) a step of mixing a raw material containing the components A and B to obtain a preliminary emulsion;
(Step 2) a step of adjusting a pH of the preliminary emulsion to 3.0 to 5.5;
(Step 3) a step of homogenizing the preliminary emulsion with the pH of 3.0 to 5.5;
(Step 4) a step of heating the homogenized preliminary emulsion with the pH of 3.0 to 5.5 to be at least 100°C or higher; and
(Step 5) a step of cooling the preliminary emulsion that has been heated to at least 100°C or higher to be at least 20°C or lower.

11. A food product using the imitation cheese according to any one of claims 1, 4 and 5.
